(19) Europäisches Patentamt / European Patent Office / Office européen des brevets

(11) **EP 2 822 218 A1**

(12) **EUROPEAN PATENT APPLICATION**
published in accordance with Art. 153(4) EPC

(43) Date of publication:
**07.01.2015 Bulletin 2015/02**

(51) Int Cl.:
***H04L 9/32*** *(2006.01)*

(21) Application number: **13755205.5**

(22) Date of filing: **14.02.2013**

(86) International application number:
**PCT/JP2013/053491**

(87) International publication number:
**WO 2013/129119 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.03.2012 JP 2012046686**

(71) Applicant: **Sony Corporation**
**Tokyo 108-0075 (JP)**

(72) Inventors:
• **SAKUMOTO, Koichi**
**Tokyo 108-0075 (JP)**
• **SHIRAI, Taizo**
**Tokyo 108-0075 (JP)**
• **KAMIO, Kazuya**
**Tokyo 108-0075 (JP)**

(74) Representative: **Jackson, Jonathan Andrew**
**D Young & Co LLP**
**120 Holborn**
**London EC1N 2DY (GB)**

(54) **INFORMATION PROCESSING DEVICE, INFORMATION PROCESSING METHOD, AND PROGRAM**

(57)    Provided is an information processing apparatus including a number acquisition unit configured to acquire a number used for a coefficient of each term constituting a set of a multi-order multivariate polynomial F = ($f_1$, ..., $f_m$), the number generated using a predetermined function from information shared between entities that execute an algorithm of a public-key authentication scheme or a digital signature scheme that uses a public key including the set of the multi-order multivariate polynomial F, and a polynomial calculation unit configured to calculate a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired by the number acquisition unit to the coefficients of the multi-order multivariate in units of groups, and executing a process in units of the groups. The polynomial calculation unit expands the input value of the variable to the same number as a number of a coefficient corresponding to one group so that the process in units of the groups is enabled before the calculation is executed.

**FIG. 10**

STRUCTURATION TECHNIQUE #1 (APPLICATION TO F)

$$F(x_1, \cdots, x_N) = \begin{cases} \sum_{I,J} a_{1IJ} x_I x_J + \sum_I b_{1I} x_I = y_1 \\ \vdots \\ \sum_{I,J} a_{MIJ} x_I x_J + \sum_I b_{MI} x_I = y_M \end{cases}$$

DATA STRUCTURE A          DATA STRUCTURE B

EP 2 822 218 A1

**Description**

Technical Field

The present technology relates to an information processing apparatus and information processing method, and a program

Background Art

With the rapid development of information processing technologies and communication technologies, documents have been digitized rapidly regardless of whether the documents are public or private. With the digitization of such documents, many individuals and companies have a considerable interest in security management of electronic documents. Countermeasures against tampering acts such as wiretapping or forgery of electronic documents have been actively studied in various fields in response to an increase in this interest. Regarding the wiretapping of electronic documents, security is ensured, for example, by encrypting the electronic documents. Further, regarding the forgery of electronic documents, security is ensured, for example, by using digital signatures. However, when the encryption or the digital signature to be used does not have high tampering resistance, sufficient security is not ensured.

The digital signature is used for specifying the author of an electronic document. Accordingly, the digital signature should be able to be generated only by the author of the electronic document. If a malicious third party is able to generate the same digital signature, the third party can impersonate the author of the electronic document. That is, an electronic document is forged by the malicious third party. Various opinions have been expressed regarding the security of the digital signature to prevent such forgery. As digital signature schemes that are currently widely used, a RSA signature scheme and a DSA signature scheme are known, for example.

The RSA signature scheme takes "difficulty of prime factorisation of a large composite number (hereinafter, prime factorisation problem)" as a basis for security. Also, the DSA signature scheme takes "difficulty of solving discrete logarithm problem" as a basis for security. These bases are based on that algorithms that efficiently solve the prime factorisation problem and the discrete logarithm problem by using a classical computer do not exist. That is, the difficulties mentioned above suggest the computational difficulty of a classical computer. However, it is said that solutions to the prime factorisation problem and the discrete logarithm problem can be efficiently calculated when a quantum computer is used.

Similarly to the RSA signature scheme and the DSA signature scheme, many of the digital signature schemes and public-key authentication schemes that are currently used also take difficulty of the prime factorisation problem or the discrete logarithm problem as a basis for security. Thus, if the quantum computer is put to practical use, security of such digital signature schemes and public-key authentication schemes will not be ensured. Accordingly, realizing new digital signature schemes and public-key authentication schemes is desired that take as a basis for security a problem different from problems such as the prime factorisation problem and the discrete logarithm problem that can be easily solved by the quantum computer. As a problem which is not easily solved by the quantum computer, there is a problem related to a multivariate polynomial, for example.

For example, as digital signature schemes that take the multivariate polynomial problem as a basis for security, those based on MI (Matsumoto-Imai cryptography), HFE (Hidden Field Equation cryptography), OV (Oil-Vinegar signature scheme), and TTM (Tamed Transformation Method cryptography) are known. For example, a digital signature scheme based on the HFE is disclosed in the following Non-Patent Literatures 1 and 2.

Citation List

Patent Literature

Non-Patent Literature 1: Jacques Patarin, Asymmetric Cryptography with a Hidden Monomial, CRYPTO 1996, pp. 45-60.
Non-Patent Literature 2: Patarin, J., Courtois, N., and Goubin, L., QUARTZ, 128-Bit Long Digital Signatures. In Naccache, D., Ed. Topics in Cryptology - CT-RSA 2001 (San Francisco, CA, USA, April 2001), vol. 2020 of Lecture Notes in Computer Science, Springer-Verlag., pp.282-297.

Summary of Invention

Technical Problem

As described above, the multivariate polynomial problem is an example of a problem called NP-hard problem which is difficult to solve even when using the quantum computer. Normally, a public-key authentication scheme that uses the multivariate polynomial problem typified by the HFE or the like uses a multi-order multivariate simultaneous equation with a special trapdoor. For example, a multi-order multivariate simultaneous equation $F(x_1, ..., x_n) = y$ related to $x_1, ..., x_n$, and linear transformations A and B are provided, and the linear transformations A and B are secretly managed. In this case, the multi-order multivariate simultaneous equation F and the linear transformations A and B are the trapdoors.

An entity that knows the trapdoors F, A, and B can solve an equation $B(F(A(x_1, ..., x_n))) = y'$ related to $x_1, ..., x_n$. On the other hand, the equation $B(F(A(x_1, ..., x_n))) = y'$ related to $x_1, ..., x_n$ is not solved by an entity that does not know the trapdoors F, A, and B. By using this mechanism, a public-key authentication scheme and a digital signature scheme that take the difficulty of solving a multi-order multivariate simultaneous equation as a basis for security can be realized.

As mentioned above, in order to realize the public-key authentication scheme or the digital signature scheme, it is necessary to prepare a special multi-order multivariate simultaneous equation satisfying $B(F(A(x_1,...,x_n))) = y$. Further, at the time of the signature generation, it is necessary to solve the multi-order multivariate simultaneous equation F. For this reason, the available multi-order multivariate simultaneous equation F has been limited to relatively easily soluble equations. That is, in the past schemes, only a multi-order multivariate simultaneous equation $B(F(A(x_1,...,x_n))) = y$ of a combined form of three functions (trapdoors) B, F, and A that can be relatively easily solved has been used, and thus it is difficult to ensure sufficient security.

Thus, the inventors of the present case took the above circumstances into consideration, and have invented an efficient public-key authentication scheme and a digital signature scheme with high security using a multi-order multivariate simultaneous equation to which an efficient solution (trapdoor) has not been known (Koichi Sakumoto, Taizo Shirai and Harunaga Hiwatari, 'Public-Key Identification Schemes Based on Multivariate Quadratic Polynomials', CRYPTO 2011, LNCS 6841, pp. 706-723, 2011).

However, as a multivariate polynomial used for the public-key authentication scheme and the digital signature scheme has many coefficients, it is necessary to decide a method for efficiently allocating the coefficients between a prover and a verifier when they are used as public keys. The present technology has been invented with the intention of providing a novel and improved information processing apparatus, information processing method, and program that can more efficiently calculate a multivariate polynomial.

Solution to Problem

According to an aspect of the present technology, there is provided an information processing apparatus including a number acquisition unit configured to acquire a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F, and a polynomial calculation unit configured to calculate a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired by the number acquisition unit to the coefficients of the multi-order multivariate in units of groups, and executing a process in units of the groups. The polynomial calculation unit expands the input value of the variable to the same number as a number of a coefficient corresponding to one group so that the process in units of the groups is enabled before the calculation is executed.

According to another aspect of the present technology, there is provided an information processing method including acquiring a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F, and calculating a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the acquired number to the coefficients of the multi-order multivariate in units of groups, and executing a process in units of the groups. In the calculation, the input value of the variable is expanded to the same number as a number of a coefficient corresponding to one group so that the process in units of the groups is enabled before the calculation is executed.

According to another aspect of the present technology, there is provided a program causing a computer to realize a number acquisition function of acquiring a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F, and a polynomial calculation function of calculating a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired through the number acquisition function to the coefficients of the multi-order multivariate in units of groups, and executing a process in units of the groups. The polynomial calculation function causes the input value of the variable to expand to the same number as a number of a coefficient corresponding to one group so that the process in units of the groups is enabled before the calculation is executed.

In addition, according to another point of view of the present technology, a computer-readable recording medium on which the program is recorded is provided.

Advantageous Effects of Invention

According to the present technology described above, a multivariate polynomial can be more efficiently calculated.

Brief Description of Drawings

[FIG. 1] FIG. 1 is an illustrative diagram for describing a configuration of algorithms of a public-key authentication scheme.
[FIG. 2] FIG. 2 is an illustrative diagram for describing a configuration of algorithms of a digital signature scheme.
[FIG. 3] FIG. 3 is an illustrative diagram for describing a configuration of an algorithm according to an n-pass public-key authentication scheme.
[FIG. 4] FIG. 4 is an illustrative diagram for describing an efficient algorithm based on a 3-pass public-key authentication scheme.
[FIG. 5] FIG. 5 is an illustrative diagram for describing parallelization of an efficient algorithm based on the 3-pass public-key authentication scheme.
[FIG. 6] FIG. 6 is an illustrative diagram for describing a configuration example of an efficient algorithm based on a 5-pass public-key authentication scheme.
[FIG. 7] FIG. 7 is an illustrative diagram for describing parallelization of an efficient algorithm based on the 5-pass public-key authentication scheme.
[FIG. 8] FIG. 8 is an illustrative diagram for describing a method for modifying the efficient algorithm based on the 3-pass public-key authentication scheme to an algorithm of a digital signature scheme.
[FIG. 9] FIG. 9 is an illustrative diagram for describing a method for modifying the efficient algorithm based on the 5-pass public-key authentication scheme to an algorithm of a digital signature scheme.
[FIG. 10] FIG. 10 is an illustrative diagram for describing a data structuration method (structuration technique #1) for efficiently substituting coefficients of a multivariate polynomial.
[FIG. 11] FIG. 11 is an illustrative diagram for describing the data structuration method (structuration technique #1) for efficiently substituting coefficients of a multivariate polynomial.
[FIG. 12] FIG. 12 is an illustrative diagram for describing a hardware configuration example of an information processing apparatus that can execute an algorithm relating to each embodiment of the present technology.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

[Flow of Description]

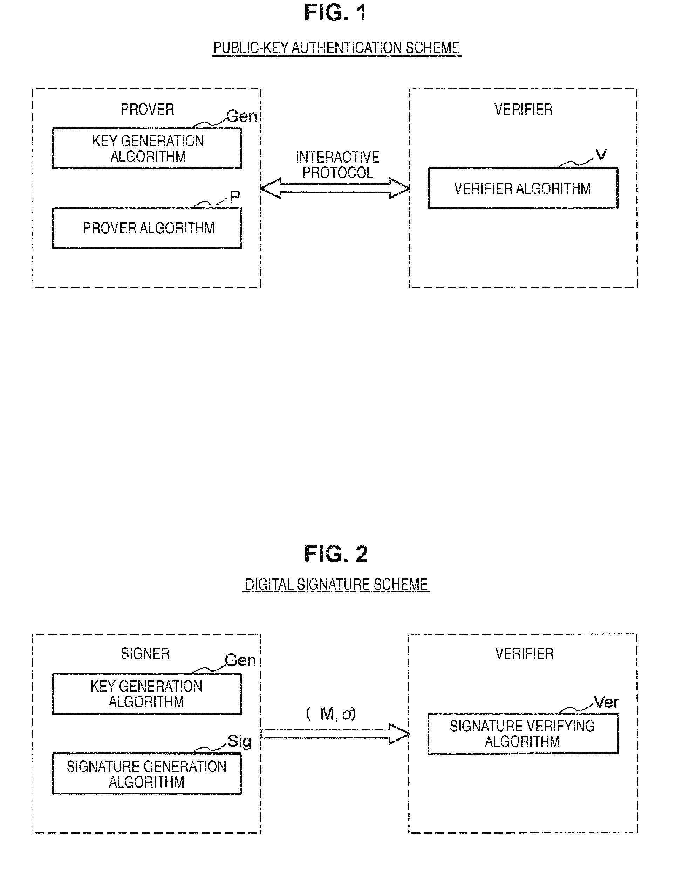

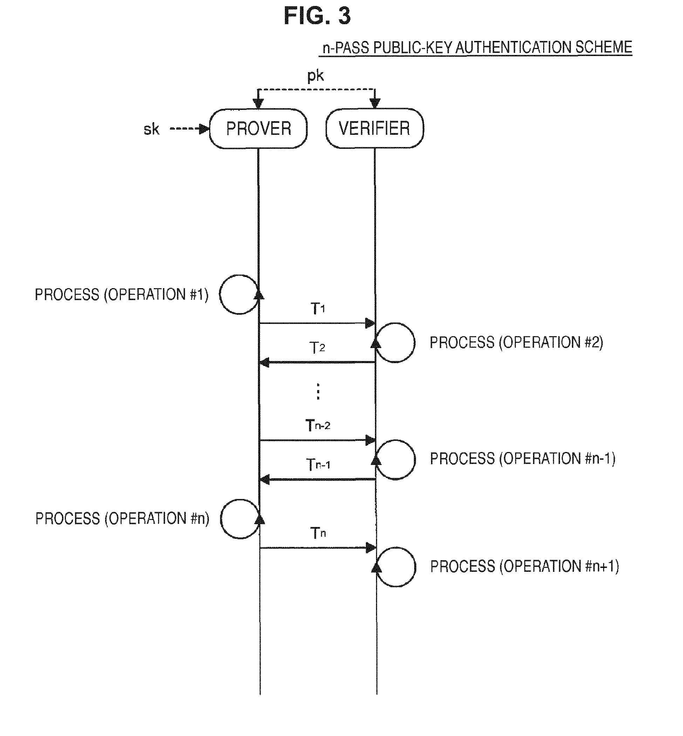

Here, a flow of the description of embodiments of the present technology to be made below will be briefly described. First, an algorithm structure of a public-key authentication scheme will be described with reference to FIG. 1. Next, an algorithm structure of a digital signature scheme will be described with reference to FIG. 2. Next, an n-pass public-key authentication scheme will be described with reference to FIG. 3.

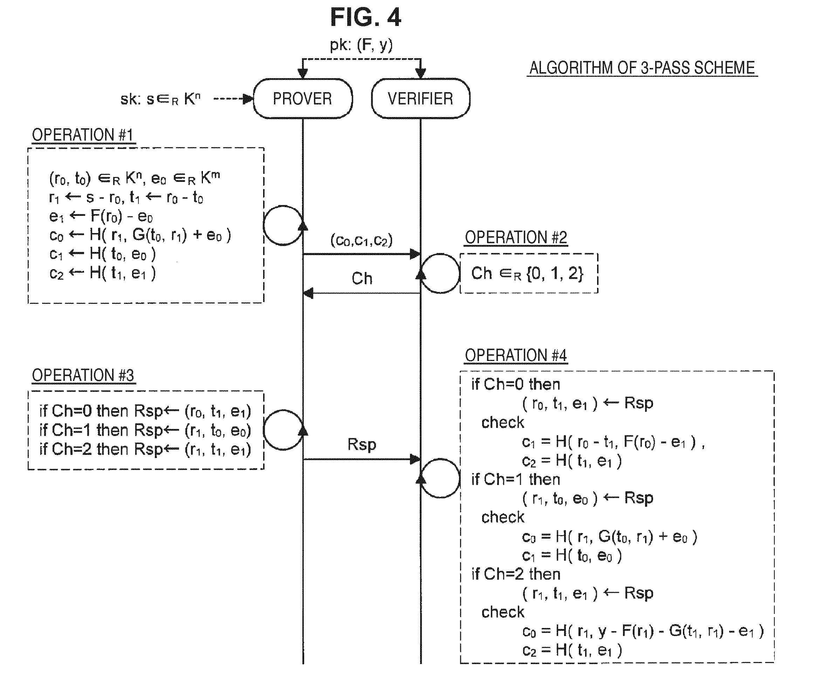

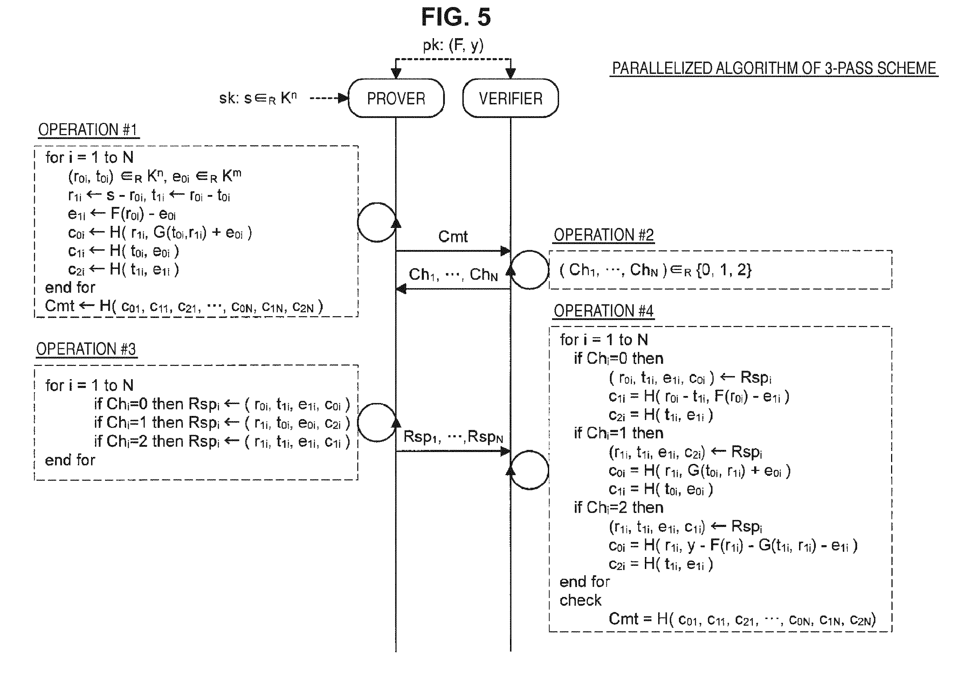

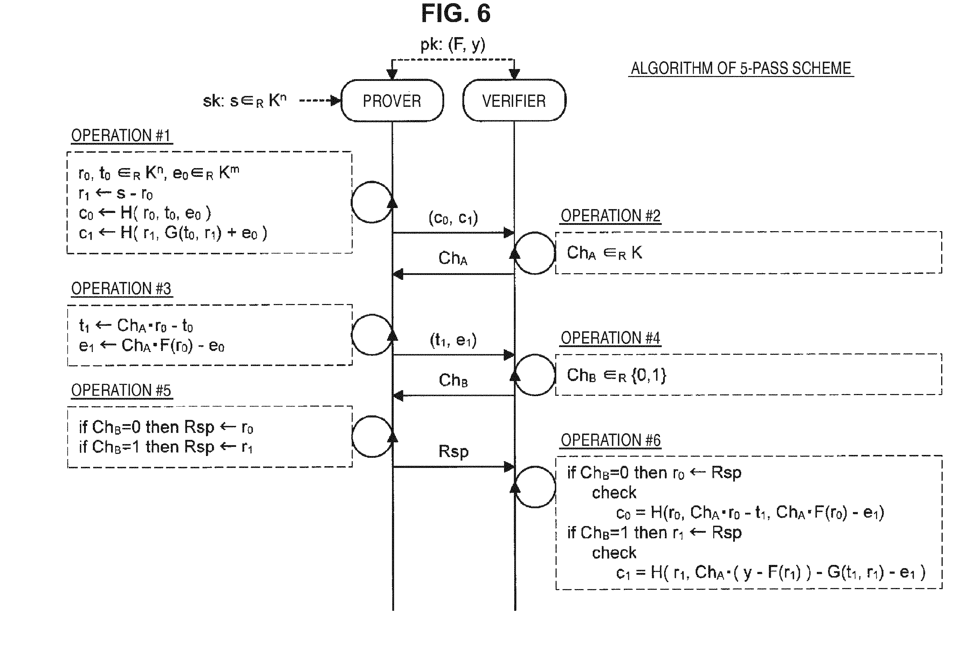

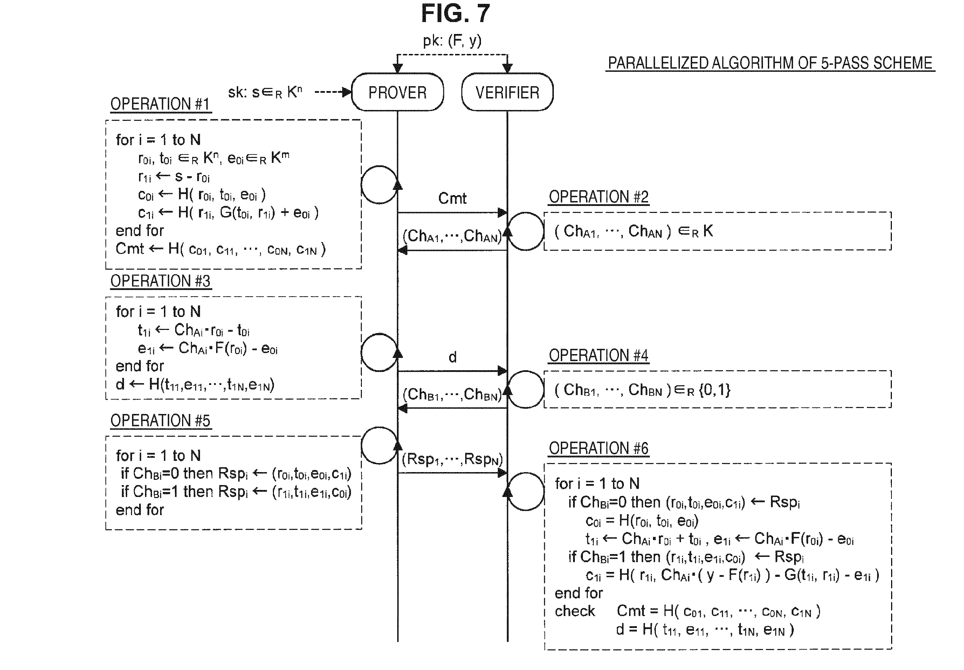

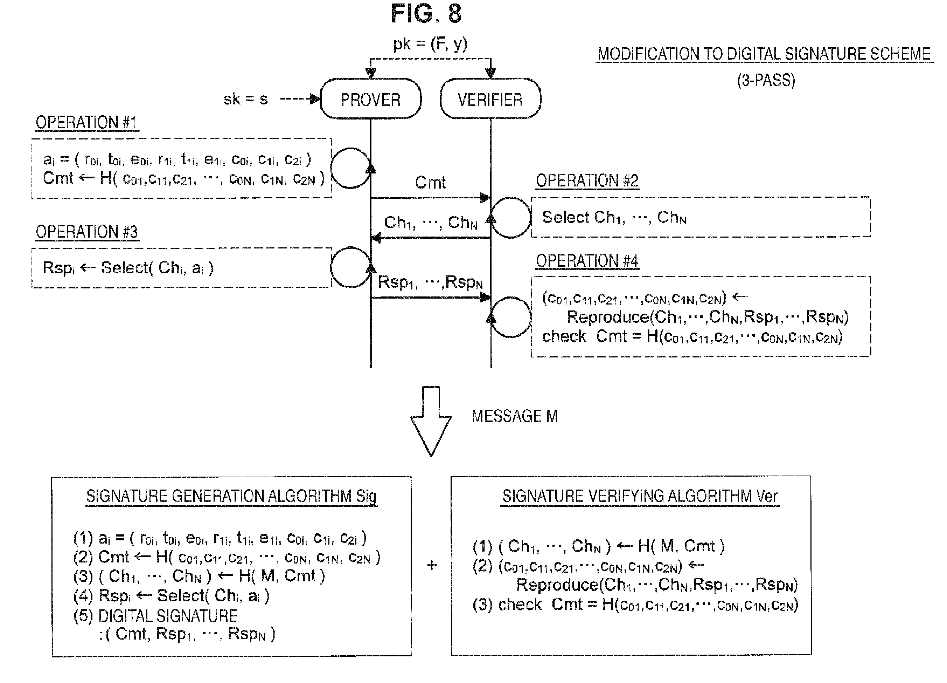

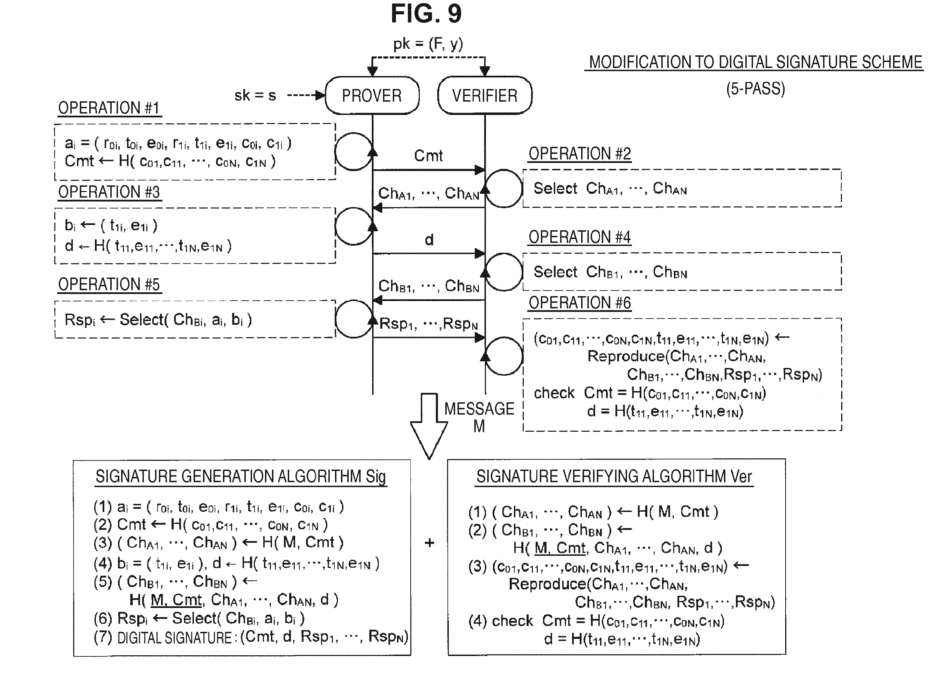

Next, a configuration example of an algorithm based on a 3-pass public-key authentication scheme will be described with reference to FIGS. 4 and 5. Next, a configuration example of an algorithm based on a 5-pass public-key authentication scheme will be described with reference to FIGS. 6 and 7. Next, a method for modifying the efficient algorithm based on the 3-pass and 5-pass public-key authentication schemes to an algorithm of a digital signature scheme will be described with reference to FIGS. 8 and 9.

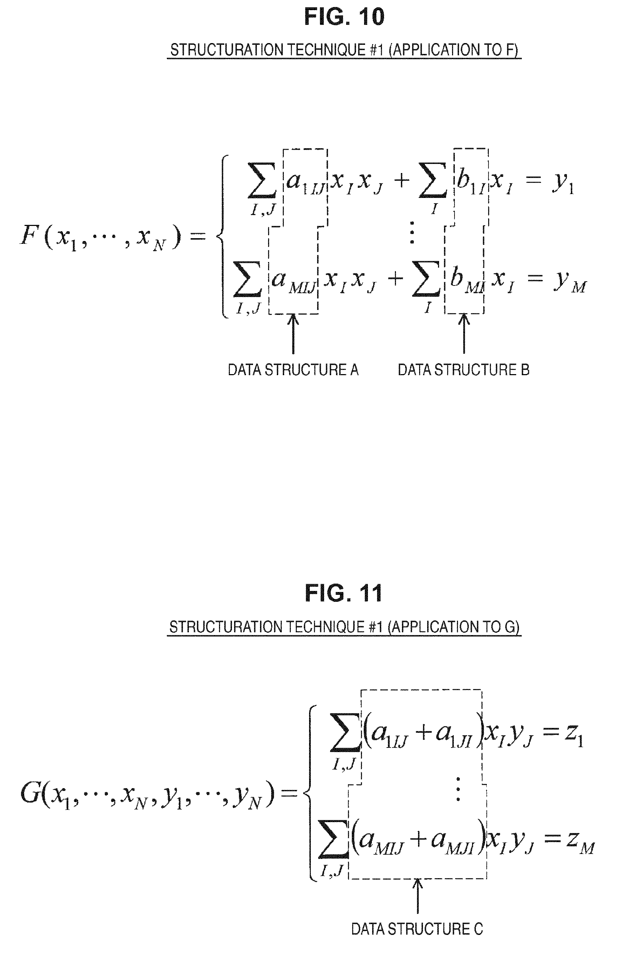

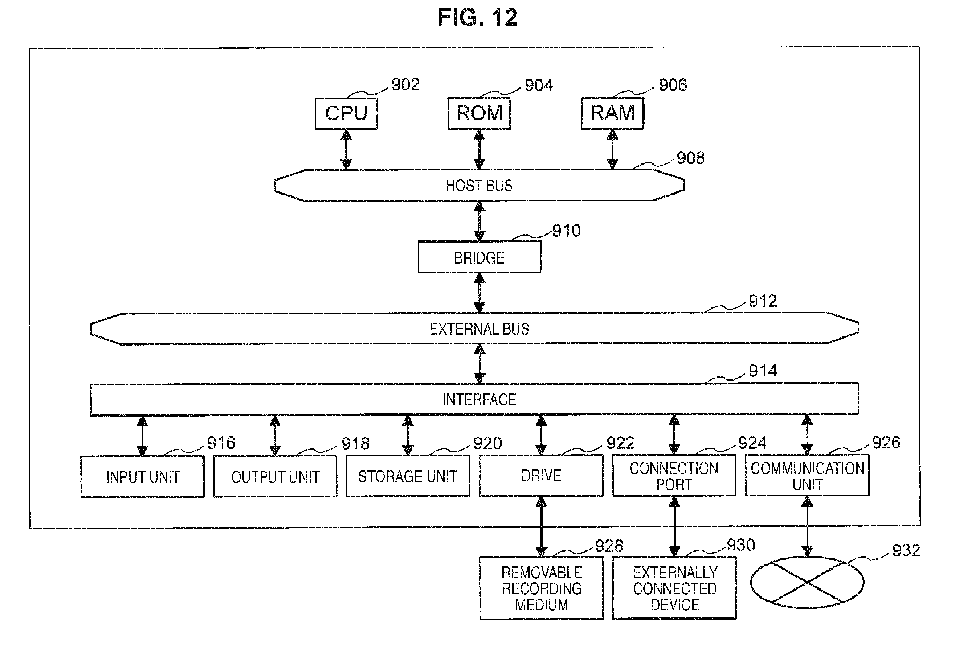

Next, a method for efficiently substituting coefficients of a multivariate polynomial will be described with reference to FIGS. 10 and 11. Next, a hardware configuration example of an information processing apparatus that can realize an algorithm relating to each embodiment of the present technology will be described with reference to FIG. 12. Finally, the technical idea of the embodiment will be summarized and an effect obtained from the technical idea will be briefly described.

(Subjects to be described)

1: Introduction

1-1: Algorithms of a public-key authentication scheme
1-2: Algorithms of a digital signature scheme
1-3: Public-key authentication scheme of n-pass

2: Configuration of an algorithm based on a 3-pass public-key authentication scheme

2-1: Detailed configuration example of the algorithm
2-2: Configuration example of a parallelized algorithm

3: Configuration of an algorithm based on a 5-pass public-key authentication scheme

3-1: Detailed configuration example of the algorithm
3-2: Configuration example of a parallelized algorithm

4: Modification to a digital signature scheme

4-1: Modification from the 3-pass public-key authentication scheme to the digital signature scheme
4-2: Modification from the 5-pass public-key authentication scheme to the digital signature scheme

5: Regarding a method for efficiently substituting a coefficient of a multivariate polynomial

5-1: Basic agreement
5-2: Data structuration

5-2-1: Structuration technique #1
5-2-2: Structuration technique #2

5-3: Further efficiency achieved by pre-processing

5-3-1: Conversion of data expression
5-3-2: Expression of index
5-3-3: Commonization of pre-processing

6: Hardware configuration example
7: Conclusion

<1. Introduction>

The present embodiment relates to a public-key authentication scheme and a digital signature scheme that take the difficulty of solving a multi-order multivariate simultaneous equation as a basis for security. However, the present embodiment relates to a public-key authentication scheme and a digital signature scheme that uses a multi-order multivariate simultaneous equation that does not have an efficient solution (trapdoor), unlike a past method such as an HFE digital signature scheme. First, overviews of an algorithm of a public-key authentication scheme, an algorithm of a digital signature scheme, and the public-key authentication scheme of n-pass will be briefly described.

[1-1: Algorithms of a public-key authentication scheme]

First, an overview of algorithms of a public-key authentication scheme will be described with reference to FIG. 1. FIG. 1 is an illustrative diagram for describing the algorithms of the public-key authentication scheme.

A public-key authentication is used when a person (prover) convinces another person (verifier) of his or her identity by using a public key pk and a secret key sk. For example, a public key $pk_A$ of a prover A is made known to the verifier B. On the other hand, a secret key $sk_A$ of the prover A is secretly managed by the prover A. According to the public-key authentication mechanism, a person who knows the secret key $sk_A$ corresponding to the public key $pk_A$ is regarded as the prover A herself.

When the prover A proves identity as being the prover A to the verifier B using the public-key authentication mechanism, the prover A should present evidence that the prover A knows the secret key $sk_A$ corresponding to the public key $pk_A$ to the verifier B via an interactive protocol. When the evidence that the prover A knows the secret key $sk_A$ is presented to the verifier B and then the verifier B finishes confirmation of the evidence, legitimacy (identity) of the prover A is proven.

However, a public-key authentication mechanism requires the following conditions for ensuring security.

The first condition is "to lower as much as possible the probability of falsification being established, at the time the interactive protocol is performed, by a falsifier not having the secret key sk". That this first condition is satisfied is called "soundness." In other words, the soundness means that "falsification is not established during the execution of an interactive protocol by a falsifier not having the secret key sk with a non-negligible probability". The second condition is that, "even if the interactive protocol is performed, information on the secret key $sk_A$ of the prover A is not at all leaked to the verifier B". That this second condition is satisfied is called "zero knowledge."

It is necessary to use an interactive protocol having soundness and zero knowledge to perform public-key authentication in security. When an authentication process is conducted using the interactive protocol that does not have soundness and zero knowledge, there would be a definite chance of false verification and a definite chance of the divulgence of secret key information, and thus the validity of the prover would not be proven even if the process itself is completed successfully. Consequently, the question of how to ensure the soundness and zero knowledge of an interactive protocol is important.

(Model)

In a model of the public-key authentication scheme, two entities, namely a prover and a verifier, are present, as shown in FIG. 1. The prover generates a pair of public key pk and secret key sk unique to the prover by using a key generation algorithm Gen. Then, the prover performs an interactive protocol with the verifier by using the pair of secret key sk and public key pk generated by using the key generation algorithm Gen. At this time, the prover performs the interactive protocol by using a prover algorithm P. As described above, in the interactive protocol, the prover proves to the verifier, by using the prover algorithm P, that she possesses the secret key sk.

On the other hand, the verifier performs the interactive protocol by using a verifier algorithm V, and verifies whether or not the prover possesses the secret key corresponding to the public key that the prover has published. That is, the verifier is an entity that verifies whether or not a prover possesses a secret key corresponding to a public key. As described, a model of the public-key authentication scheme is configured from two entities, namely the prover and the verifier, and three algorithms, namely the key generation algorithm Gen, the prover algorithm P and the verifier algorithm V.

Note that, expressions "prover" and "verifier" are used in the following description, but these expressions strictly mean entities. Therefore, the subject that performs the key generation algorithm Gen and the prover algorithm P is an information processing apparatus corresponding to the entity "prover". Similarly, the subject that performs the verifier algorithm V is an information processing apparatus. The hardware configuration of these information processing apparatuses is as shown in FIG. 12, for example. That is, the key generation algorithm Gen, the prover algorithm P, and the verifier algorithm V are performed by a CPU 902 based on a program recorded on a ROM 904, a RAM 906, a storage unit 920, a removable recording medium 928, or the like.

(Key generation algorithm Gen)

The key generation algorithm Gen is used by a prover. The key generation algorithm Gen is an algorithm for generating a pair of a public key pk and a secret key sk unique to the prover. The public key pk generated by the key generation algorithm Gen is published. Furthermore, the published public key pk is used by the verifier. On the other hand, the secret key sk generated by the key generation algorithm Gen is secretly managed by the prover. The secret key sk that is secretly managed by the prover is used to prove to the verifier of possession of the secret key sk corresponding to the public key pk by the prover. Formally, the key generation algorithm Gen is represented as formula (1) below as an algorithm that takes security parameter $1^\lambda$ ($\lambda$ is an integer of 0 or more) as an input and outputs the secret key sk and the public key pk.

[Math 1]

$$(sk, pk) \leftarrow Gen(1^\lambda)$$
$$\cdots (1)$$

(Prover algorithm P)

The prover algorithm P is used by a prover. The prover algorithm P is an algorithm for proving to the verifier that the prover possesses the secret key sk corresponding to the public key pk. In other words, the prover algorithm P is an algorithm that takes the public key pk and the secret key sk as inputs and performs the interactive protocol.

(Verifier algorithm V)

The verifier algorithm V is used by the verifier. The verifier algorithm V is an algorithm that verifies whether or not the prover possesses the secret key sk corresponding to the public key pk during the interactive protocol. The verifier algorithm V is an algorithm that takes the public key pk as input, and outputs 0 or 1 (1 bit) according to the execution results of the interactive protocol. Note that, the verifier decides that the prover is illegitimate in the case where the verifier algorithm V outputs 0, and decides that the prover is legitimate in the case where the verifier algorithm V outputs 1. Formally, the verifier algorithm V is expressed as in the following formula (2).

[Math 2]

$$0/1 \leftarrow V(pk)$$
$$\cdots (2)$$

As above, realizing meaningful public-key authentication involves having the interactive protocol satisfy the two conditions of soundness and zero knowledge. However, proving that the prover possesses the secret key sk involves the prover executing a procedure dependent on the secret key sk, and after notifying the verifier of the result, causing the verifier to execute verification based on the content of the notification. The procedure dependent on the secret key sk is executed to ensure soundness. At the same time, no information about the secret key sk should be leaked to the verifier. For this reason, the above key generation algorithm Gen, the prover algorithm P, and the verifier algorithm V should be skillfully designed to satisfy these requirements.

The foregoing thus summarizes the algorithms in a public-key authentication scheme.

[1-2: Algorithms for a digital signature scheme]

Next, algorithms for a digital signature scheme will be summarized with reference to FIG. 2. FIG. 2 is an illustrative diagram for describing an overview of algorithms of the digital signature scheme.

Unlike paper documents, it is not possible to physically sign or affix a seal to digitized data. For this reason, proving the creator of digitized data involves an electronic setup yielding effects similarly to physically signing or affixing a seal to a paper document. This setup is digital signatures. A digital signature refers to a setup that associates given data with signature data known only to the creator of the data, provides the signature data to a recipient, and verifies that signature data on the recipient's end.

(Model)

As illustrated in FIG. 2, the two identities of signer and verifier exist in a model of a digital signature scheme. Further, the model of the digital signature scheme is made up of three algorithms: a key generation algorithm Gen, a signature generation algorithm Sig, and a signature verifying algorithm Ver.

The signer uses the key generation algorithm Gen to generate a paired signature key sk and verification key pk unique to the signer. The signer also uses the signature generation algorithm Sig to generate a digital signature $\sigma$ to attach to a message M. In other words, the signer is an entity that attaches a digital signature to the message M. Meanwhile, the verifier uses the signature verifying algorithm Ver to verify the digital signature $\sigma$ attached to the message M. In other words, the verifier is an entity that verifies the digital signature $\sigma$ in order to confirm whether or not the creator of the message M is the signer.

Note that although the terms "signer" and "verifier" are used in the description hereinafter, these terms ultimately mean entities. Consequently, the agent that executes the key generation algorithm Gen and the signature generation algorithm Sig is an information processing apparatus corresponding to the "signer" entity. Similarly, the agent that executes the signature verifying algorithm Ver is an information processing apparatus. The hardware configuration of these information processing apparatus is as illustrated in FIG. 12, for example. In other words, the key generation algorithm Gen, the signature generation algorithm Sig, and the signature verifying algorithm Ver are executed by a device such as the CPU 902 on the basis of a program recorded onto a device such as the ROM 904, the RAM 906, the storage unit 920, or the removable recording medium 928.

(Key generation algorithm Gen)

The key generation algorithm Gen is used by the signer. The key generation algorithm Gen is an algorithm that generates a paired signature key sk and verification key pk unique to the signer. The verification key pk generated by the key generation algorithm Gen is revealed. Meanwhile, the signer keeps the signature key sk generated by the key generation algorithm Gen in secret. The signature key sk is then used to generate a digital signature $\sigma$ to attach to a message M. For example, the key generation algorithm Gen accepts a security parameter $1^\lambda$ (where $\lambda$ is an integer equal to or greater than 0) as input, and outputs a signature key sk and a verification key pk. In this case, the key generation algorithm Gen may be expressed formally as in the following formula (3).

[Math 3]

$$(sk, pk) \leftarrow Gen(1^\lambda)$$
$$\cdots \ (3)$$

(Signature generation algorithm Sig)

The signature generation algorithm Sig is used by the signer. The signature generation algorithm Sig is an algorithm that generates the digital signature $\sigma$ to be attached to the message M. The signature generation algorithm Sig is an algorithm that accepts the signature key sk and the message M as input, and outputs the digital signature $\lambda$. The signature generation algorithm Sig may be expressed formally as in the following formula (4).

[Math 4]

$$\sigma \leftarrow Sig(sk, M)$$
$$\cdots \ (4)$$

(Signature verifying algorithm Ver)

The signature verifying algorithm Ver is used by the verifier. The signature verifying algorithm Ver is an algorithm that verifies whether or not the digital signature $\sigma$ is a valid digital signature for the message M. The signature verifying algorithm Ver is an algorithm that accepts a signer's verification key pk, a message M, and a digital signature q as input, and outputs 0 or 1 (1 bit). The signature verifying algorithm Ver can be expressed formally as in the following formula (5). At this point, the verifier decides that the digital signature $\sigma$ is invalid in the case where the signature verifying algorithm Ver outputs 0 (the case where the public key pk rejects the message M and the digital signature q), and decides that the digital signature $\sigma$ is valid in the case where the signature verifying algorithm Ver outputs 1 (the case where the public key pk accepts the message M and the digital signature $\sigma$).

[Math 5]

$$0/1 \leftarrow Ver(pk, M, \sigma)$$
$$\cdots (5)$$

The foregoing thus summarizes the algorithms in the digital signature scheme.

[1-3: N-pass public-key authentication scheme]

Next, an n-pass public-key authentication scheme will be described with reference to FIG. 3. FIG. 3 is an illustrative diagram for describing an n-pass public-key authentication scheme.

As above, a public-key authentication scheme is an authentication scheme that proves to a verifier that a prover possesses a secret key sk corresponding to a public key pk during an interactive protocol. Further, the interactive protocol has to satisfy the two conditions of soundness and zero knowledge. For this reason, in the interactive protocol, both the prover and the verifier exchange information n times while executing respective processes, as illustrated in FIG. 3.

In the case of the n-pass public-key authentication scheme, the prover executes a process using the prover algorithm P (Operation #1), and transmits information $T_1$ to the verifier. Subsequently, the verifier executes a process using the verifier algorithm V (Operation #2), and transmits information $T_2$ to the prover. This execution of processes and transmission of information $T_k$ is successively conducted for k = 3 to n and lastly, a process (Operation #n+1) is executed. Transmitting and receiving information n times in this way is thus called an "n-pass" public-key authentication scheme.

The foregoing thus describes the n-pass public-key authentication scheme.

<2: Configuration of an algorithm based on a 3-pass public-key authentication scheme>

Hereinafter, an algorithm based on a 3-pass public-key authentication scheme will be described. Note that, in description provided below, there are cases in which the 3-pass public-key authentication scheme is referred to as a "3-pass scheme."

[2-1: Detailed configuration example of the algorithm (FIG. 4)]

First, with reference to FIG. 4, a detailed configuration example of the algorithm based on the 3-pass scheme will be introduced. FIG. 4 is an illustrative diagram for describing a detailed configuration of the algorithm based on the 3-pass scheme. Herein, a case in which a set of quadratic polynomials $(f_1(x), ..., f_m(x))$ is used as a part of a public key pk will be considered. However, a quadratic polynomial $f_i(x)$ is set to be expressed as the following formula (6). In addition, a vector $(x_1, ..., x_n)$ is marked by x, and a set of quadratic polynomials $(f_1(x), ..., f_m(x))$ is marked by a multivariate polynomial F(x).

[Math 6]

$$f_i(x_1, \cdots, x_n) = \sum_{j,k} a_{ijk} x_j x_k + \sum_j b_{ij} x_j$$

$$\cdots (6)$$

In addition, the set of quadratic polynomials $(f_1(x), \ldots, f_m(x))$ can be expressed by formula (7) described below. In addition, $A_1, \ldots, A_m$ are nxn matrixes. Furthermore, $b_1, \ldots, b_m$ each are n×1 vectors.

[Math 7]

$$F(x) = \begin{pmatrix} f_1(x) \\ \vdots \\ f_m(x) \end{pmatrix} = \begin{pmatrix} x^T A_1 x + b_1^T x \\ \vdots \\ x^T A_m x + b_m^T x \end{pmatrix}$$

$$\cdots (7)$$

When these expressions are used, the multivariate polynomial F can be expressed as formula (8) and formula (9) described below. Establishment of the expressions can be easily checked from formula (10) described below.

[Math 8]

$$F(x+y) = F(x) + F(y) + G(x,y)$$

$$\cdots (8)$$

$$G(x,y) = \begin{pmatrix} y^T (A_1^T + A_1) x \\ \vdots \\ y^T (A_m^T + A_m) x \end{pmatrix}$$

$$\cdots (9)$$

$$f_l(x+y) = (x+y)^T A_l(x+y) + b_l^T(x+y)$$

$$= x^T A_l x + x^T A_l y + y^T A_l x + y^T A_l y + b_l^T x + b_l^T y$$

$$= f_l(x) + f_l(y) + x^T A_l y + y^T A_l x$$

$$= f_l(x) + f_l(y) + x^T (A_l^T)^T y + y^T A_l x$$

$$= f_l(x) + f_l(y) + (A_l^T x)^T y + y^T A_l x$$

$$= f_l(x) + f_l(y) + y^T (A_l^T x) + y^T A_l x$$

$$= f_l(x) + f_l(y) + y^T (A_l^T + A_l) x$$

$$\cdots \quad (1\ 0)$$

As above, when F(x+y) is divided into a first portion that relates to x, a second portion that relates to y, and a third portion that relates to both x and y, the term G(x, y) corresponding to the third portion is bilinear with regard to x and y. Hereinbelow, there are cases in which the term G(x, y) is referred to as a bilinear term. When this feature is used, an efficient algorithm can be constructed.

For example, using vectors of to $\in K^n$ and $e_0 \in K^m$, a multivariate polynomial $F_1(x)$ used for masking a multivariate polynomial $F(x+r)$ is expressed as $F_1(x) = G(x, t_0)+e_0$. In this case, the sum of the multivariate polynomial $F(x+r_0)$ and $G(x)$ is expressed as formula (11) described below. Here, if $t_1 = r_0+t_0$ and $e_1 = F(r_0)+e_0$ are set, a multivariate polynomial $F_2(x) = F(x+r_0)+F_1(x)$ can be expressed by vectors $t_1 \in K^n$ and $e_1 \in K^m$. For this reason, if $F_1(x) = G(x, t_0)+e_0$ is set, $F_1$ and $F_2$ can be expressed using the vector of $K^n$ and the vector of $K^m$, and thereby an efficient algorithm with a small data size necessary for communication can be realized.

[Math 9]

$$F(x+r_0) + F_1(x)$$

$$= F(x) + F(r_0) + G(x,r_0) + G(x,t_0) + e_0$$

$$= F(x) + G(x,r_0 + t_0) + F(r_0) + e_0$$

$$\cdots \quad (1\ 1)$$

Note that leakage of information relating to $r_0$ from $F_2$ (or $F_1$) does not occur at all. For example, even if $e_1$ and $t_1$ (or $e_0$ and $t_0$) are given, it is not possible to know the information relating to $r_0$ as long as $e_0$ and $t_0$ (or $e_1$ and $t_1$) are unknown. Thus, zero knowledge is ensured. Hereinbelow, an algorithm of the 3-pass scheme constructed based on the logic will be described. The algorithm of the 3-pass scheme that will be described herein is constituted by a key generation algorithm Gen, a prover algorithm P, and a verifier algorithm V as below.

(Key generation algorithm Gen)

The key generation algorithm Gen generates m multivariate polynomials $f_1(x_1, ..., x_n), ..., f_m(x_1, ..., x_n)$ defined

on a ring K and a vector $s = (s_1, ..., s_n) \in K^n$. Next, the key generation algorithm Gen calculates $y = (y_1, ..., y_m) \leftarrow (f_1(s), ..., f_m(s))$. Also, the key generation algorithm Gen sets $(f_1(x_1, ..., x_n), ..., f_m(x_1, ..., x_n), y)$ as the public key pk and sets s as a secret key.

(Prover algorithm P, Verifier algorithm V)

Hereinafter, a process performed by the prover algorithm P and a process performed by the verifier algorithm V during the interactive protocol will be described with reference to FIG. 4. During the foregoing interactive protocol, a prover does not leak information on the secret key s at all to a verifier and expresses to the verifier that "the prover knows s satisfying $y = F(s)$." On the other hand, the verifier verifies whether or not the prover knows s satisfying $y = F(s)$. The public key pk is assumed to be made known to the verifier. Also, the secret key s is assumed to be secretly managed by the prover. Hereinafter, the description will be made with reference to the flowchart illustrated in FIG. 4.

Operation #1:

As shown in FIG. 4, first, the prover algorithm P randomly generates $r_0$, to $\in K^n$ and $e_0 \in K^m$. Next, the prover algorithm P calculates $r_1 \leftarrow s\text{-ro}$. This calculation corresponds to manipulation of masking the secret key s with the vector $r_0$. Furthermore, the prover algorithm P calculates $t_1 \leftarrow r_0\text{-}t_0$. Next, the prover algorithm P calculates $e_1 \leftarrow F(r_0)\text{-}e_0$.

Operation #1 (continued)

Next, the prover algorithm P calculates $c_0 \leftarrow H(r_1, G(t_0, r_1+e_0))$. Next, the prover algorithm P calculates $c_1 \leftarrow H(t_0, e_0)$. Next, the prover algorithm P calculates $c_2 \leftarrow H(t_1, e_1)$. A message $(c_0, c_1, c_2)$ generated in Operation #1 is transmitted to the verifier algorithm V.

Operation #2:

The verifier algorithm V that has received the message $(c_0, c_1, c_2)$ selects which verification pattern will be used among three verification patterns. For example, the verifier algorithm V selects one numerical value from three numerical values of {0, 1, 2} indicating types of verification patterns, and sets the selected numerical value to be a challenge Ch. The challenge Ch is transmitted to the prover algorithm P.

Operation #3:

The prover algorithm P that has received the challenge Ch generates responses Rsp to be transmitted to the verifier algorithm V according to the received challenge Ch. In the case of Ch = 0, the prover algorithm P generates a response $Rsp = (r_0, t_1, e_1)$. In the case of Ch = 1, the prover algorithm P generates a response $Rsp = (r_1, t_0, e_0)$. In the case of Ch = 2, the prover algorithm P generates a response $Rsp = (r_1, t_1, e_1)$. The responses Rsp generated in Operation #3 are transmitted to the verifier algorithm V.

Operation #4:

The verifier algorithm V that has received the responses Rsp executes the following verification process using the received responses Rsp.

In the case of Ch = 0, the verifier algorithm V verifies whether or not the equation of $c_1 = H(r_0\text{-}t_1, F(r_0)\text{-}e_1)$ is valid. Furthermore, the verifier algorithm V verifies whether or not the equation of $c_2 = H(t_1, e_1)$ is valid. When the verification for all of the equations succeeds, the verifier algorithm V outputs a value of 1 indicating success of authentication, and when the verification fails, the verifier algorithm outputs a value of 0 indicating failure of authentication.

In the case of Ch = 1, the verifier algorithm V verifies whether or not the equation of $c_0 = H(r_1, G(t_0, r_1)+e_0)$ is valid. Furthermore, the verifier algorithm V verifies whether or not the equation of $c_1 = H(t_0, e_0)$ is valid. When the verification for all of the equations succeeds, the verifier algorithm V outputs the value of 1 indicating success of authentication, and when the verification fails, the verifier algorithm outputs the value of 0 indicating failure of authentication.

In the case of Ch = 2, the verifier algorithm V verifies whether or not the equation of $c_0 = H(r_1, y\text{-}F(r_1)\text{-}G(t_1, r_1)\text{-}e_1)$ is valid. Furthermore, the verifier algorithm V verifies whether or not the equation of $c_2 = H(t_1, e_1)$ is valid. When the verification for all of the equations succeeds, the verifier algorithm V outputs the value of 1 indicating success of authentication, and when the verification fails, the verifier algorithm outputs the value of 0 indicating failure of authentication.

Hereinabove, the configuration example of the efficient algorithm of 3-pass has been described.

[2-2: Configuration example of a parallelized algorithm (FIG. 5)]

Next, a method of parallelizing the algorithm of the 3-pass scheme shown in FIG. 4 will be described with reference to FIG. 5. Note that description of the configuration of the key generation algorithm Gen will be omitted.

Applying the interactive protocol makes it possible to keep the probability of successful false proof to 2/3 or less. Consequently, executing the interactive protocol twice makes it possible to keep the probability of successful false proof to $(2/3)^2$ or less. Furthermore, if the interactive protocol is executed N times, the probability of successful false proof becomes $(2/3)^N$, and if N is set to a sufficiently large number (N = 140, for example), the probability of successful false proof becomes negligibly small.

As methods of executing the interactive protocol a plurality of times, for example, a serial method of sequentially repeating exchange of a message, a challenge, and a response a plurality of times, and a parallel method of exchanging a plurality of messages, challenges, and responses at once are considered. Furthermore, a hybrid-type method obtained by combining the serial method and the parallel method is also considered. Here, an algorithm for executing the interactive protocol based on the 3-pass scheme in a parallel manner (hereinafter referred to as a parallelized algorithm) will be described with reference to FIG. 5.

Operation #1:

As shown in FIG. 5, first, the prover algorithm P executes the following processes (1) to (6) for i = 1 to N.

Process (1): The prover algorithm P generates vectors of $r_{0i}, t_{0i} \in K^n$ and $e_{0i} \in K^m$ at random.
Process (2): The prover algorithm P calculates $r_{1i} \leftarrow s - r_{0i}$. This calculation corresponds to manipulation of masking the secret key s with the vector $r_{0i}$. Furthermore, the prover algorithm P calculates $t_{1i} \leftarrow r_{0i} + t_{0i}$.
Process (3): The prover algorithm P calculates $e_{1i} \leftarrow F(r_{0i}) - e_{0i}$.
Process (4): The prover algorithm P calculates $c_{0i} \leftarrow H(r_{1i}, G(r_{1i}, t_{0i}) + e_{0i})$.
Process (5): The prover algorithm P calculates $c_{1i} \leftarrow H(t_{0i}, e_{0i})$.
Process (6): The prover algorithm P calculates $c_{2i} \leftarrow H(t_{1i}, e_{1i})$.

Operation #1 (continued)

After the processes (1) to (6) described above are executed for i = 1 to N, the prover algorithm P calculates $Cmt \leftarrow H(c_{01}, c_{11}, c_{21}, ..., c_{0N}, c_{1N}, c_{2N})$. The hash value Cmt generated in Operation #1 is transmitted to the verifier algorithm V. In this manner, by converting the message $(c_{01}, c_{11}, c_{21}, ..., c_{0N}, c_{1N}, c_{2N})$ into hash values and then transmitting the value to the verifier algorithm V, a communication amount can be reduced.

Operation #2:

The verifier algorithm V that has received the hash value Cmt selects which verification pattern will be used among three verification patterns for each of i = 1 to N. For example, the verifier algorithm V selects one numerical value from three numerical values {0, 1, 2} indicating types of the verification patterns for each of i = 1 to N, and sets a selected numerical value as a challenge $Ch_1$. Challenges $Ch_1, ..., Ch_N$ are transmitted to the prover algorithm P.

Operation #3:

The prover algorithm P that has received the challenges $Ch_1, ..., Ch_N$ generates responses $Rsp_1, ..., Rsp_N$ to be transmitted to the verifier algorithm V according to each of the received challenges $Ch_1, ..., Ch_N$. In the case of $Ch_i = 0$, the prover algorithm P generates $Rsp_1 = (r_{0i}, t_{1i}, e_{1i}, c_{0i})$. In the case of $Ch_i = 1$, the prover algorithm P generates $Rsp_1 = (r_{1i}, t_{0i}, e_{0i}, c_{2i})$. In the case of $Ch_i = 2$, the prover algorithm P generates $Rsp_1 = (r_{1i}, t_{1i}, e_{1i}, c_{1i})$.
The responses $Rsp_1, ..., Rsp_N$ generated in Operation #3 are transmitted to the verifier algorithm V.

Operation #4:

The verifier algorithm V that has received the responses $Rsp_1, ..., Rsp_N$ executes the processes (1) to (3) described below using the received responses $Rsp_1, ..., Rsp_N$ for i = 1 to N. However, the verifier algorithm V executes the process (1) when $Ch_i = 0$, executes the process (2) when $Ch_i = 1$, and executes the process (3) when $Ch_i = 2$.
Process (1): When $Ch_i = 0$, the verifier algorithm V extracts $(r_{0i}, t_{1i}, e_{1i}, c_{0i})$ from $Rsp_i$. Next, the verifier algorithm V calculates $c_{1i} = H(r_{0i} - t_{1i}, F(r_{0i}) - e_{1i})$. Furthermore, the verifier algorithm V calculates $c_{2i} = H(t_{1i}, e_{1i})$. Then, the verifier algorithm V retains $(c_{0i}, c_{1i}, c_{2i})$.

Process (2): When $Ch_i = 1$, the verifier algorithm V extracts $(r_{1i}, t_{0i}, e_{0i}, c_{2i})$ from $Rsp_i$. Next, the verifier algorithm V calculates $c_{0i} = H(r_{1i}, G(t_{0i}, r_{1i})+e_{0i})$. Furthermore, the verifier algorithm V calculates $c_{1i} = H(t_{0i}, e_{0i})$. Then, the verifier algorithm V retains $(c_{0i}, c_{1i}, c_{2i})$.

Process (3): When $Ch_i = 2$, the verifier algorithm V extracts $(r_{1i}, t_{1i}, e_{1i}, c_{1i})$ from $Rsp_i$. Next, the verifier algorithm V calculates $c_{0i} = H(r_{1i}, y-F(r_{1i})-G(t_{1i}, r_{1i})-e_{1i})$. Furthermore, the verifier algorithm V calculates $c_{2i} = H(t_{1i}, e_{1i})$. Then, the verifier algorithm V retains $(c_{0i}, c_{1i}, c_{2i})$.

After the processes (1) to (3) are executed for i = 1 to N, the verifier algorithm V verifies whether or not the equation of $Cmt = H(c_{01}, c_{11}, c_{21}, ..., c_{0N}, c_{1N}, c_{2N})$ is valid. When the verification succeeds, the verifier algorithm V outputs the value of 1 indicating success of the verification, and when the verification fails, the verifier algorithm outputs the value of 0 indicating failure of verification.

Hereinabove, the configuration example of the efficient parallelized algorithm based on the 3-pass scheme has been described.

<3: Configuration of an algorithm based on a 5-pass public-key authentication scheme>

Next, an algorithm based on a 5-pass public-key authentication scheme will be described. Note that, in description below, there are cases in which the 5-pass public-key authentication scheme is referred to as a "5-pass scheme."

While the probability of false proof per execution of the interactive protocol in the case of the 3-pass scheme is 2/3, the probability of false proof per execution of interactive protocol in the case of the 5-pass scheme is 1/2+1/q. However, q is the order of a ring to be used. Thus, when the order of a ring is sufficiently large, the 5-pass scheme can lower the probability of false proof per execution of interactive protocol, and accordingly, the probability of false proof can be sufficiently lowered with a small number of execution times of the interactive protocol.

When it is desired to set the probability of false proof to be $1/2^n$ or lower in the 3-pass scheme, for example, it is necessary to execute the interactive protocol n/(log3-1) = 1.701n times or more. On the other hand, when it is desired to set the probability of false proof to be $1/2^n$ or lower in the 5-pass scheme, it is necessary to execute the interactive protocol n/(1-log(1+1/q)) times or more. Thus, if q = 24, a communication amount necessary for realizing a same security level is smaller in the 5-pass scheme than in the 3-pass scheme.

[3-1: Detailed configuration example of the algorithm (FIG. 6)]

First, a detailed configuration example of the algorithm based on the 5-pass scheme will be introduced with reference to FIG. 6. FIG. 6 is an illustrative diagram for describing a detailed configuration of an algorithm based on the 5-pass scheme. Here, a case in which the set of quadratic polynomials $(f_1(x), ..., f_m(x))$ is used as a part of a public key pk will be considered. However, a quadratic polynomial $f_i(x)$ is set to be expressed as formula (6) described above. In addition, a vector $(x_1, ..., x_n)$ is marked by x, and a set of quadratic polynomials $(f_1(x), ..., f_m(x))$ is marked by a multivariate polynomial F(x).

In the same manner as the algorithm based on the 3-pass scheme, using two vectors of to $\in K^n$ and $e_0 \in K^m$, a multivariate polynomial $F_1(x)$ used for masking a multivariate polynomial $F(x+r_0)$ is expressed as $F_1(x) = G(x, t_0)+e_0$. When the expression is used, for the multivariate polynomial $F(x+r_0)$, the relationship expressed by the following formula (12) is obtained.

[Math 10]

$$Ch_A \cdot F(x+r_0) + F_1(x)$$

$$= Ch_A \cdot F(x) + Ch_A \cdot F(r_0) + Ch_A \cdot G(x, r_0) + G(x, t_0) + e_0$$

$$= Ch_A \cdot F(x) + G(x, Ch_A \cdot r_0 + t_0) + Ch_A \cdot F(r_0) + e_0$$

$$\cdots (12)$$

For this reason, if $t_1 = Ch_A \cdot r_0 + t_0$ and $e_1 = Ch_A \cdot F(r_0) + e_0$ are set, a multivariate polynomial $F_2(x) = Ch_A \cdot F(x+r_0) + F_1(x)$ after masking can also be expressed by two vectors of $t_1 \in K^n$ and $e_1 \in K^m$. For this reason, if $F_1(x) = G(x, t_0)+e_0$ is set, $F_1$ and $F_2$ can be expressed using the vector of $K^n$ and the vector of $K^m$, and accordingly, an efficient algorithm having a small data size necessary for communication can be realized.

Note that leakage of information relating to $r_0$ from $F_2$ (or $F_1$) does not occur at all. For example, even if $e_1$ and

$t_1$ (or $e_0$ and $t_0$) are given, it is not possible to know the information relating to $r_0$ as long as $e_0$ and $t_0$ (or $e_1$ and $t_1$) are unknown. Thus, zero knowledge is ensured. Hereinbelow, the algorithm of the 5-pass scheme constructed based on the logic will be described. The algorithm of the 5-pass scheme that will be described herein is constituted by a key generation algorithm Gen, a prover algorithm P, and a verifier algorithm V as below.

(Key generation algorithm Gen)

The key generation algorithm Gen generates multivariate polynomials $f_1(x_1, ..., x_n), ..., f_m(x_1, ..., x_n)$ defined on a ring K and a vector $s = (s_1, ..., s_n) \in K^n$. Next, the key generation algorithm Gen calculates $y = (y_1, ..., y_m) \leftarrow (f_1(s), ..., f_m(s))$. Also, the key generation algorithm Gen sets $(f_1, ..., f_m, y)$ as the public key pk and sets s as a secret key. Hereinafter, a vector $(x_1, ..., x_n)$ is represented as x and the set of multivariate polynomial $(f_1(x), ..., f_m(x))$ is represented as F(x).

(Prover algorithm P, verifier algorithm V)

Hereinbelow, a process executed using the prover algorithm P and the verifier algorithm V in an interactive protocol will be described with reference to FIG. 6. In the interactive protocol, a prover proves to a verifier that "he or she knows s satisfying $y = F(s)$" without leaking information of the secret key s to the verifier at all. On the other hand, the verifier verifies whether or not the prover knows the s satisfying $y = F(s)$. Note that the public key pk is assumed to be disclosed to the verifier. In addition, the secret key s is assumed to be secretly managed by the prover. Hereinbelow, description will proceed according to the flowchart shown in FIG. 6.

Operation #1:

As shown in FIG. 6, first, the prover algorithm P randomly generates vectors $r_0 \in K^n$, $t_0 \in K^n$ and $e_0 \in K^m$. Next, the prover algorithm P calculates $r_1 \leftarrow s - r_0$. This calculation corresponds to manipulation of masking the secret key s with the vector $r_0$. Next, the prover algorithm P generates a hash value $c_0$ of vectors $r_0$, $t_0$ and $e_0$. In other words, the prover algorithm P calculates $c_0 \leftarrow H(r_0, t_0, e_0)$. Next, the prover algorithm P generates a hash value $c_1$ of $G(t_0, r_1) + e_0$ and $r_1$. In other words, the prover algorithm P calculates $c_0 \leftarrow H(r_1, G(t_0, r_1) + e_0)$. A message $(c_0, c_1)$ generated in Operation #1 is transmitted to the verifier algorithm V.

Operation #2:

The verifier algorithm V that has received the message $(c_0, c_1)$ selects one number $Ch_A$ at random from the about q elements of the ring K, and transmits the selected number $Ch_A$ to the prover algorithm P.

Operation #3:

The prover algorithm P that has received the number $Ch_A$ calculates $t_1 \leftarrow Ch_A \cdot r_0 - t_0$. Furthermore, the prover algorithm P calculates $e_1 \leftarrow Ch_A \cdot F(r_0) - e_0$. Then, the prover algorithm P transmits $t_1$ and $e_1$ to the verifier algorithm V.

Operation #4:

The verifier algorithm V that has received $t_1$ and $e_1$ selects a verification pattern that will be used among two verification patterns. For example, the verifier algorithm V selects one numerical value from two numerical values {0, 1} indicating types of the verification patterns, and sets the selected numerical value to be a challenge $Ch_B$. The challenge $Ch_B$ is transmitted to the prover algorithm P.

Operation #5:

The prover algorithm P that has received the challenge $Ch_B$ generates a response Rsp to be sent to the verifier algorithm V according to the received challenge $Ch_B$. When $Ch_B = 0$, the prover algorithm P generates a response Rsp = $r_0$. When $Ch_B = 1$, the prover algorithm P generates a response Rsp = $r_1$. The responses Rsp generated in Operation #5 are transmitted to the verifier algorithm V.

Operation #6:

The verifier algorithm V that has received the responses Rsp executes the following verification process using the received responses Rsp.

When $Ch_B = 0$, the verifier algorithm V executes $r_0 \leftarrow Rsp$. Then, the verifier algorithm V verifies whether or not the equation of $c_0 = H(r_0, Ch_A \cdot r_0 - t_1, Ch_A \cdot F(r_0) - e_1)$ is valid. When the verification succeeds, the verifier algorithm V outputs the value of 1 indicating success of authentication, and when the verification fails, the verifier algorithm outputs the value of 0 indicating failure of authentication.

When $Ch_B = 1$, the verifier algorithm V executes $r_1 \leftarrow Rsp$. Then, the verifier algorithm V verifies whether or not the equation of $c_1 = H_1(r_1, Ch_A \cdot (y - F(r_1)) - G(t_1, r_1) - e_1)$ is valid. When the verification succeeds, the verifier algorithm V outputs the value of 1 indicating success of authentication, and when the verification fails, the verifier algorithm outputs the value of 0 indicating failure of authentication.

Hereinabove, the configuration example of the efficient algorithm based on the 5-pass scheme has been described.

[3-2: Configuration example of a parallelized algorithm (FIG. 7)]

Next, a method for parallelizing the algorithm of the 5-pass scheme shown in FIG. 6 will be described with reference to FIG. 7. Note that description of the configuration of the key generation algorithm Gen will be omitted.

As described above, if the interactive protocol based on the 5-pass scheme is applied, the probability of successful false proof can be suppressed to $(1/2 + 1/q)$ or lower. Thus, if the interactive protocol is executed two times, the probability of successful false proof can be suppressed to $(1/2 + 1/q)^2$ or lower. Furthermore, when the interactive protocol is executed N times, the probability of successful false proof is $(1/2 + 1/q)^N$, and if N is set to be a number that is sufficiently large (for example, N = 80), the probability of successful false proof becomes low enough to be negligible.

As methods of executing the interactive protocol a plurality of times, for example, a serial method of sequentially repeating exchange of a message, a challenge, and a response a plurality of times, and a parallel method of exchanging a plurality of messages, challenges, and responses at once are considered. Furthermore, a hybrid-type method obtained by combining the serial method and the parallel method is also considered. Here, an algorithm for executing the interactive protocol based on the 5-pass scheme in a parallel manner (hereinafter referred to as a parallelized algorithm) will be described.

Operation #1:

As shown in FIG. 7, first, the prover algorithm P executes processes (1) to (4) for i = 1 to N.

Process (1): The prover algorithm P generates vectors of $r_{0i}, t_{0i} \in K^n$ and $e_{0i} \in K^m$ at random.
Process (2): The prover algorithm P calculates $r_{1i} \leftarrow s - r_{0i}$. This calculation corresponds to manipulation of masking the secret key s with the vector $r_{0i}$.
Process (3): The prover algorithm P calculates $c_{0i} \leftarrow H(r_{0i}, t_{0i}, e_{0i})$.
Process (4): The prover algorithm P calculates $c_{1i} \leftarrow H(r_{1i}, G(t_{0i}, r_{1i}) + e_{0i})$.

After the processes (1) to (4) are performed for i = 1 to N, the prover algorithm P executes a hash value $Cmt \leftarrow H(c_{01}, c_{11}, \ldots, c_{0N}, C_{1N})$. Then, the hash value Cmt generated in Operation #1 is transmitted to the verifier algorithm V.

Operation #2:

The verifier algorithm V that has received the hash value Cmt selects one number $Ch_{Ai}$ at random from the about q elements of the ring K for each of i = 1 to N, and transmits the selected number $Ch_{Ai}$ (i = 1 to N) to the prover algorithm P.

Operation #3:

The prover algorithm P that has received the number $Ch_{Ai}$ (i = 1 to N) calculates $t_{1i} \leftarrow Ch_{Ai} \cdot r_{0i} - t_{0i}$ for each of i = 1 to N. Furthermore, the prover algorithm P calculates $e_{1i} \leftarrow Ch_{Ai} \cdot F(r_{0i}) - e_{0i}$ for each of i = 1 to N. Next, the prover algorithm P calculates a hash value $d \leftarrow H(t_{11}, e_{11}, \ldots, t_{1N}, e_{1N})$. Then, the prover algorithm P transmits the hash value d to the verifier algorithm V.

Operation #4:

The verifier algorithm V that has received the hash value d selects a verification pattern that will be used among two verification patterns for each of i = 1 to N. For example, the verifier algorithm V selects one numerical value from two numerical values {0, 1} indicating types of the verification patterns, and sets a selected numerical value as a challenge

$Ch_{Bi}$. Challenges $Ch_{Bi}$ (i = 1 to N) are transmitted to the prover algorithm P.

Operation #5:

The prover algorithm P that has received the challenges $Ch_{Bi}$ (i = 1 to N) generates responses $Rsp_i$ to be sent to the verifier algorithm V according to the received challenge $Ch_{Bi}$ with regard to i = 1 to N. When $Ch_{Bi} = 0$, the prover algorithm P generates the responses $Rsp_1 = (r_{0i}, t_{0i}, e_{1i}, c_{1i})$. When $Ch_{Bi} = 1$, the prover algorithm P generates the responses $Rsp_1 = (r_{1i}, t_{1i}, e_{1i}, c_{0i})$. The responses $Rsp_i$ (i = 1 to N) generated in Operation #5 are transmitted to the verifier algorithm V.

Operation #6:

The verifier algorithm V that has received the responses $Rsp_i$ (i = 1 to N) executes processes (1) and (2) below using the received responses $Rsp_i$ (i = 1 to N)
Process (1): When $Ch_{Bi} = 0$, the verifier algorithm V executes $(r_{0i}, t_{0i}, e_{0i}, c_{1i}) \leftarrow Rsp_i$. Then, the verifier algorithm V calculates $c_{0i} = H(r_{0i}, t_{0i}, e_{0i})$. Furthermore, the verifier algorithm V calculates $t_{1i} \leftarrow Ch_{Ai} \cdot r_{0i} + t_{0i}$ and $e_{1i} \leftarrow Ch_{Ai} \cdot F(r_{0i}) - e_{0i}$. Then, the verifier algorithm V retains $(c_{0i}, c_{1i}, t_{1i}, e_{1i})$.
Process (2): When $Ch_{Bi} = 1$, the verifier algorithm V executes $(r_{1i}, t_{1i}, e_{1i}, c_{0i}) \leftarrow Rsp_i$. Then, the verifier algorithm V calculates $c_{1i} = H(r_{1i}, Ch_{Ai} \cdot (y - F(r_{1i})) - G(t_{1i}, r_{1i}) - e_{1i}$. Furthermore, the verifier algorithm V retains $(c_{0i}, c_{1i}, t_{1i}, e_{1i})$.
After the processes (1) and (2) are executed for i = 1 to N, the verifier algorithm V verifies whether or not the equation of $Cmt = H(c_{01}, c_{11}, ..., c_{0N}, c_{1N})$ is valid. Furthermore, the verifier algorithm V verifies whether or not the equation of $d = H(t_{11}, e_{11}, ..., t_{1N}, e_{1N})$ is valid. Then, when the verification succeeds, the verifier algorithm V outputs the value of 1 indicating success of authentication, and when the verification fails, the verifier algorithm outputs the value of 0 indicating failure of authentication.
Hereinabove, the configuration example of the efficient parallelized algorithm based on the 5-pass scheme has been described.

<4: Modification to a digital signature scheme>

Next, a method of modifying the public-key authentication scheme described above to a digital signature scheme will be introduced.
When a prover in the model of the public-key authentication scheme is associated with a signer in the digital signature scheme, it is easily understood that the public-key authentication scheme is similar to the model of the digital signature scheme in that only the prover should convince a verifier. Based on this notion, the method of modifying the public-key authentication scheme described above to the digital signature scheme will be described.

[4-1: Modification from the 3-pass public-key authentication scheme to the digital signature scheme (FIG. 8)]

First, modification from the 3-pass public-key authentication scheme to the digital signature scheme will be described.
The efficient algorithm based on the 3-pass scheme (for example, refer to FIG. 5) is expressed by three interactions and four Operations #1 to #4 as shown in FIG. 8.
Operation #1 includes a process (1) of generating $a_i = (r_{0i}, t_{0i}, e_{0i}, r_{1i}, t_{1i}, e_{1i}, c_{0i}, c_{1i}, c_{2i})$ and a process (2) of calculating $Cmt \leftarrow H(c_{01}, c_{11}, c_{21}, ..., c_{0N}, c_{1N}, c_{2N})$ for i = 1 to N. Cmt generated by the prover algorithm P in Operation #1 is transmitted to the verifier algorithm V.
Operation #2 includes a process of selecting $Ch_1, ..., Ch_N$. $Ch_1, ..., Ch_N$ selected by the verifier algorithm V in Operation #2 are transmitted to the prover algorithm P.
Operation #3 includes a process of generating $Rsp_1, ..., Rsp_N$ using $Ch_1, ..., Ch_N$ and $a_1, ..., aN$. This process is expressed by $Rsp_i \leftarrow Select (Ch_i, a_i)$. $Rsp_1, ..., Rsp_N$ generated by the prover algorithm P in Operation #3 are transmitted to the verifier algorithm V.
Operation #4 includes a process (1) of reproducing $c_{01}, c_{11}, c_{21}, ..., c_{0N}, c_{1N}, c_{2N}$ using $Ch_1, ..., Ch_N$ and $Rsp_1, ..., Rsp_N$ and a process (2) of verifying $Cmt = H(c_{01}, c_{11}, c_{21}, ..., c_{0N}, c_{1N}, c_{2N})$ using the reproduced $c_{01}, c_{11}, c_{21}, ..., c_{0N}, c_{1N}, c_{2N}$.
The algorithm of the public-key authentication scheme expressed in Operations #1 to #4 described above is modified to a signature generation algorithm Sig and a signature verifying algorithm Ver as shown in FIG. 8.

(Signature generation algorithm Sig)

First, a configuration of the signature generation algorithm Sig will be described. The signature generation algorithm Sig is constituted by processes (1) to (5) described below.

Process (1): The signature generation algorithm Sig generates $a_i = (r_{0i}, t_{0i}, e_{0i}, r_{1i}, t_{1i}, e_{1i}, c_{0i}, c_{1i}, c_{2i})$.

Process (2): The signature generation algorithm Sig calculates $Cmt \leftarrow H(c_{01}, c_{11}, c_{21}, ..., c_{0N}, c_{1N}, c_{2N})$.

Process (3): The signature generation algorithm Sig calculates $(Ch_1, ..., Ch_N) \leftarrow H(M, Cmt)$. The M is a message in which a signature is given.

Process (4): The signature generation algorithm Sig calculates $Rsp_i \leftarrow Select (Ch_i, a_i)$.

Process (5): The signature generation algorithm Sig sets $(Cmt, Rsp_1, ..., Rsp_N)$ as a signature.

(Signature verifying algorithm Ver)

Next, a configuration of the signature verifying algorithm Ver will be described. The signature verifying algorithm Ver is constituted by processes (1) to (3) below.

Process (1): The signature verifying algorithm Ver calculates $(Ch_1, ..., Ch_N) \leftarrow H(M, Cmt)$.

Process (2): The signature verifying algorithm Ver generates $c_{01}, c_{11}, c_{21}, ..., c_{0N}, c_{1N}, c_{2N}$ using $Ch_1, ..., Ch_N$ and $Rsp_1, ..., Rsp_N$.

Process (3): The signature verifying algorithm Ver verifies $Cmt = H(c_{01}, c_{11}, c_{21}, ..., c_{0N}, c_{1N}, c_{2N})$ using the reproduced $c_{01}, c_{11}, c_{21}, ..., c_{0N}, c_{1N}, c_{2N}$.

As described above, by associating the prover in the model of the public-key authentication scheme with the signer in the digital signature scheme, the algorithm of the public-key authentication scheme can be modified to the algorithm of the digital signature scheme.

[4-2: Modification from the 5-pass public-key authentication scheme to the digital signature scheme (FIG. 9)]

Next, modification from the 5-pass public-key authentication scheme to the digital signature scheme will be described.

As shown in FIG. 9, the sufficient algorithm based on the 5-pass scheme (for example, refer to FIG. 7) is expressed by five interactions and six Operations #1 to #6.

Operation #1 includes a process (1) of generating $a_i = (r_{0i}, t_{0i}, e_{0i}, r_{1i}, t_{1i}, e_{1i}, c_{0i}, c_{1i})$ and a process (2) of calculating $Cmt \leftarrow H(c_{01}, c_{11}, ..., c_{0N}, c_{1N})$ for i = 1 to N. Cmt generated from the prover algorithm P in Operation #1 is transmitted to the verifier algorithm V.

Operation #2 includes a process of selecting $Ch_{A1}, ..., Ch_{AN}$. $Ch_{A1}, ..., Ch_{AN}$ selected from the verifier algorithm V in Operation #2 are transmitted to the prover algorithm P.

Operation #3 includes a process of generating $bi = (t_{1i}, e_{1i})$ and a process of generating $d = H(t_{11}, e_{11}, ... , t_{1N}, e_{1N})$ for i = 1 to N. d generated from the prover algorithm P in Operation #3 is transmitted to the verifier algorithm V.

Operation #4 includes a process of selecting $Ch_{B1}, ..., Ch_{BN}$. $Ch_{B1}, ..., Ch_{BN}$ selected from the verifier algorithm V in Operation #4 are transmitted to the prover algorithm P.

Operation #5 includes a process of generating $Rsp_1, ..., Rsp_N$ using $Ch_{B1}, ..., Ch_{BN}$, $a_1, ..., aN$, and $b_1, ..., bN$. This process is expressed as $Rsp_i \leftarrow Select (Ch_{Bi}, a_i, b_i)$. $Rsp_1, ..., Rsp_N$ generated from the prover algorithm P in Operation #5 are transmitted to the verifier algorithm V.

Operation #6 includes a process of reproducing $c_{01}, c_{11}, ..., c_{0N}, c_{1N}, t_{11}, e_{11}, ... , t_{1N}, e_{1N}$ using $Ch_{A1}, ..., Ch_{AN}$, $Ch_{B1}, ..., Ch_{BN}$, and $Rsp_1, ..., Rsp_N$, a process of verifying $Cmt = H(c_{01}, c_{11}, ..., c_{0N}, c_{1N})$ using the reproduced $c_{01}, c_{11}, ..., c_{0N}, c_{1N}$, and a process of verifying $d = H(t_{11}, e_{11}, ... , t_{1N}, e_{1N})$.

The algorithm of the public-key authentication scheme expressed in Operations #1 to #6 described above is modified to the signature generation algorithm Sig and the signature verifying algorithm Ver shown in FIG. 9.

(Signature generation algorithm Sig)

First, a configuration of the signature generation algorithm Sig will be described. The signature generation algorithm Sig is constituted by processes (1) to (7) below.

Process (1): The signature generation algorithm Sig generates $a_i = (r_{0i}, t_{0i}, e_{0i}, r_{1i}, t_{1i}, e_{1i}, c_{0i}, c_{1i})$.

Process (2): The signature generation algorithm Sig calculates $Cmt \leftarrow H(c_{01}, c_{11}, ..., c_{0N}, c_{1N})$.

Process (3): The signature generation algorithm Sig calculates $(Ch_{A1}, ..., Ch_{AN}) \leftarrow H(M, Cmt)$. The M represents a message to which a signature is given.

Process (4): The signature generation algorithm Sig generates $b_i = (t_{1i}, e_{1i})$ for i = 1 to N. Furthermore, the signature generation algorithm Sig computes $d = H(t_{11}, e_{11}, ... , t_{1N}, e_{1N})$.

Process (5): The signature generation algorithm Sig calculates $(Ch_{B1}, ..., Ch_{BN}) \leftarrow H(M, Cmt, Ch_{A1}, ..., Ch_{AN}, d)$. Note that it may be modified to $(Ch_{B1}, ..., Ch_{BN}) \leftarrow H(Ch_{A1}, ..., Ch_{AN}, d)$.

Process (6): The signature generation algorithm Sig calculates $Rsp_i \leftarrow Select(Ch_{Bi}, a_i, b_i)$.

Process (7): The signature generation algorithm Sig sets $(Cmt, d, Rsp_1, ..., Rsp_N)$ as a digital signature.

(Signature verifying algorithm Ver)

Next, a configuration of the signature verifying algorithm Ver will be described. The signature verifying algorithm Ver is constituted by processes (1) to (4) below.

Process (1): The signature verifying algorithm Ver calculates $(Ch_{A1}, ..., Ch_{AN}) \leftarrow H(M, Cmt)$.

Process (2): The signature verifying algorithm Ver calculates $(Ch_{B1}, ..., Ch_{BN}) \leftarrow H(M, Cmt, Ch_{A1}, ..., Ch_{AN}, d)$. Note that, when modification to $(Ch_{B1}, ..., Ch_{BN}) \leftarrow H(Ch_{A1}, ..., Ch_{AN}, d)$ occurs in the process (5) executed by the signature verifying algorithm Ver, the signature verifying algorithm Ver calculates $(Ch_{B1}, ..., Ch_{BN}) \leftarrow H(Ch_{A1}, ..., Ch_{AN}, d)$.

Process (3): The signature verifying algorithm Ver generates $t_{11}, e_{11}, ... , t_{1N}, e_{1N}, c_{01}, c_{11}, ..., c_{0N}, c_{1N})$ using $Ch_{A1}, ..., Ch_{AN}, Ch_{B1}, ..., Ch_{BN}$, and $Rsp_1, ..., Rsp_N$.

Process (4): The signature verifying algorithm Ver verifies $Cmt = H(c_{01}, c_{11}, ..., c_{0N}, c_{1N})$ and $d = H(t_{11}, e_{11}, ... , t_{1N}, e_{1N},)$ using the reproduced $c_{01}, c_{11}, ..., c_{0N}, c_{1N}$.

As described above, by associating the prover in the model of the public-key authentication scheme with the signer in the digital signature scheme, the algorithm of the public-key authentication scheme can be modified to the algorithm of the digital signature scheme.

<5: Regarding a method for efficiently substituting a coefficient of a multivariate polynomial>

Hitherto, a detailed method of sharing a multivariate polynomial between a prover (or a signer) and a verifier has not been clarified. As a method of sharing a multivariate polynomial, a method of sharing a seed used when a coefficient (random number) of a multivariate polynomial is generated between both parties is considered. However, it is hard to say that a multivariate polynomial is shared unless both parties share the order of applying the random number generated using the shared seed to the coefficient.

[5-1: Basic agreement]

A basic agreement is made with regard to in which order a random number sequence generated using a shared seed between a prover (or a signer) and a verifier is applied to a multivariate polynomial. Then, when the multivariate polynomial is used, the random number sequence is applied to the multivariate polynomial according to the basic agreement. Using this method, the multivariate polynomial can be shared between a prover (or a signer) and a verifier.

[5-2: Data structuration]

However the number of coefficients constituting a multivariate polynomial is enormous. When one coefficient is expressed in units of one bit, scores of a minimum of thousands of bits of data are necessary for expressing a multivariate polynomial. For this reason, a processing load in substituting a coefficient of a multivariate polynomial with a number is very heavy. Thus, the present inventors have invented a technique of structuring coefficients of a multivariate polynomial in predetermined units and streamlining a substitution process of the coefficients (structuration technique #1). Furthermore, the inventors of this case have invented a technique of enhancing processing efficiency when a substitution process is executed on coefficients of a same multivariate polynomial a plurality of times (structuration technique #2). Hereinbelow, the techniques will be described in detail.

(5-2-1: Structuration technique #1 (FIGS. 10 and 11))

First, the structuration technique #1 will be described. The structuration technique #1 is, as shown in FIGS. 10 and 11, a technique of organizing coefficients of a same kind of terms constituting a multivariate polynomial as one data structure. In the example of FIG. 10, coefficients $a_{1IJ}$ to $a_{MIJ}$ of a multivariate polynomial F are organized as a data structure A, and coefficients $b_{1I}$ to $b_{MI}$ are organized as a data structure B. In addition, as shown in FIG. 11, the same technique can be applied also to a multivariate polynomial G. In this case, coefficients $(a_{1IJ}+a_{1JI})$ to $(a_{MIJ}+a_{MJI})$ are organized as a data structure.

When the structuration technique #1 is not applied, calculation of the multivariate polynomial F constituted by M polynomials with N variables is performed through the algorithm shown in (Example 1). In the case of (Example 1), it is necessary to execute an AND operation (&) of 1 bit $2 \times N \times (N+1) \times M/2$ times. Furthermore, it is necessary to execute an XOR operation (^) of 1 bit $1 \times N \times (N+1) \times M/2$ times. Note that the input x is assumed to be N bits.

(Example 1)

> input x;
>
> for L = 1 to M
>
>  for I = 1 to N
>
>   for J = I to N
>
>    $[L^{th}$ bit of y$]$ ^ = $[a_{LIJ}]$ & $[I^{th}$ bit of x$]$ & $[J^{th}$ bit of x$]$;
>
>   end for
>
>  end for
>
> end for
>
> output y;

On the other hand, when the coefficients are structured as shown in FIG. 10 and each part of the generated random numbers is sequentially applied to the coefficients of the multivariate polynomial F, a substitution algorithm of the coefficients is set as in (Example 2). In the case of (Example 2), an AND operation (&) of M bits may be executed $2 \times N \times (N+1) \times M/2$ times, and an XOR operation (^) of M bits may be executed $N \times (N+1)/2$ times. Note that $a_{(1 \text{ to } M)IJ}$ is generated at each loop timing. In addition, the coefficient may be used several times. For example, when loops are executed $N(N+1)/2$ times, $[a_{(1 \text{ to } M)IJ}]$ may not be generated each time, but generated once every $M^{th}$ time of the loop. In addition, in the loops of M times, $[a_{(1 \text{ to } M)IJ}]$ may be used being rotated by one bit.

(Example 2)

```
input x;

for I = 1 to N

    for J = I to N

        [1st to Mth bits of y] ^ = [a(1 to M)IJ] & [Ith bit of x] & [Jth bit of x];

    end for

end for

output y;
```

In addition, when the coefficients are structured as shown in FIG. 10, an intermediate result when the coefficients of the multivariate polynomial F are applied may be retained in a table. In this case, the algorithm described above becomes as shown in (Example 3). Note that, in arrays of $a_{IJ}$ [0] [0] to $a_{IJ}$ [$2^k$-1] [$2^k$-1], each stores $a_{IJ}$ [$x_1$, ..., $x_k$] [$z_1$, ... $z_k$] = ($a_{(k(I-1)+1)(k(J-1)+1)}$ & $x_1$ & $z_1$) ^ ... ^ ($a_{(k(I-1)+1)\ (k(J-1)+k)}$ & $x_1$ & $z_k$) ^ ... ^ ($a_{(k(I-1)+k)(k(J-1)+1)}$ & $x_k$ & $z_1$) ^ ... ^ ($a_{(k(I-1)+k)(k(J-1)+k)}$ & $x_k$ & $z_k$). In the case of (Example 3), the XOR operation (^) of M bits may only be executed (N/k) (N/k+1)/2 times. However, a necessary memory amount is $2^{2k}/k^2$ times the algorithm of (Example 2).

For example, when k = 1, the XOR operation of M bits is 120x119/2 = 7140 times, a necessary memory amount is $2^2$ = 4 times (Example 2), and the number of times of the loop is not changed. In addition, when k = 2, the XOR operation of M bits is 60x59/2 = 1770 times, a necessary memory amount is $2^4/4$ = 4 times, and the number of times of the loop is 1/4. When k = 4, the XOR operation of M bits is 30x29/2 = 435 times, a necessary memory amount is $2^8/4^2$ = 16 times, and the number of times of the loop is 1/16.4. When k = 6, the XOR operation of M bits is 20×19/2 = 190 times, a necessary memory amount is $2^{12}/6^2$ = 114 times, and the number of times of the loop is 1/37.6. When k = 8, the XOR operation of M bits is 15x14/2 = 135 times, a necessary memory amount is $2^{16}/8^2$ = 1024 times, and the number of times of the loop is 1/52.9.

(Example 3)

```
input x;

for I = 1 to N/k

    for J = I to N/k

        [1st to Mth bits of y] ^ = a(1 to M)IJ [k(I−1)+1st to kth bits of x]
[k(J−1)+1st to kth bits of x];

    end for

end for

output y;
```

Note that the technique shown in (Example 3) can be exactly said to be a technique in which the value of $F_{IJ}(...)$ defined by formula (13) below is calculated in advance and retained as an array.
[Math 11]

$$F(x_1,\cdots,x_n)=\sum_{I,J}F_{IJ}\left(x_{k(I-1)+1},\cdots,x_{k(I-1)+k},x_{k(J-1)+1},\cdots,x_{k(J-1)+k}\right)=y$$

$$\cdots \quad (1\,3)$$

Wherein, $F_{IJ}(x_{k(I-1)+1},\cdots,x_{k(I-1)+k},x_{k(J-1)+1},\cdots,x_{k(J-1)+k})$ indicates a portion of $F_{(x_1,\cdots,x_N)}$ of which the value is decided by $[x_{k(I-1)+1},\cdots,x_{k(I-1)+k}]$ and $[x_{k(J-1)+1},\cdots,x_{k(J-1)+k}]$.

Hereinabove, the detailed algorithm has been described exemplifying the case in which the structuration technique #1 is applied to the multivariate polynomial F. With this configuration, speed-up in processing for executing the algorithm can be expected.

So far, the algorithm calculating the multivariate polynomial F by applying the structuration technique #1 has been described with reference to FIG. 10. Since each element of the multivariate polynomial G is also expressed in the second-order form, the structuration technique #1 can also be applied to calculation of the multivariate polynomial G in the same manner as it is as shown in FIG. 11.

For example, when the structuration technique #1 described above is not applied, an algorithm for calculating the multivariate polynomial G is expressed as in (Example 1') below. Note that inputs x and y are assumed to be N bits.

(Example 1')

```
input x, y;
for L = 1 to M

    for I = 1 to N
      for J = 1 to N
        [Lth bit of z] ^ = [aLIJ+ aLJI] & [Ith bit of x] & [Jth bit of y];
      end for
    end for

  end for
output z;
```

When the above-described structuration technique #1 is applied to (Example 1') described above, an algorithm for calculating the multivariate polynomial G is expressed as in (Example 2') described below.

(Example 2')

```
input x, y;

for I = 1 to N

    for J = 1 to N

        [1st to Mth bits of z] ^ = [a(1 to M)IJ+a(1 to M) JI] & [Ith bit of x] & [Jth bit

of y];

    end for

end for

output z;
```

In addition, in the case of the technique of retaining the intermediate result when the coefficients of the multivariate polynomial G in a table, an algorithm for calculating the multivariate polynomial G becomes as in (Example 3') corresponding to (Example 3) described above. Note that, in the arrays of $a_{IJ}$ [0] [0] to $a_{IJ}$ [$2^k$-1] [$2^k$-1], each stores $a_{IJ}$ [$x_1$, ..., $x_k$] [$y_1$, ... $y_k$] = ($a_{(k(I-1)+1)(k(J-1)+1)}$ & $x_1$ & $y_1$) ^ ... ^ ($a_{(k(I-1)+1) (k(J-1)+k)}$ & $x_1$ & $y_k$) ^ ... ^ ($a_{(k(I-1)+k) (k(J-1)+1)}$ & $x_k$ & $y_1$) ^ ... ^ ($a_{(k(I-1)+k) (k(J-1)+k)}$ & $x_k$ & $y_k$).

In the case of (Example 3'), the XOR operation (^) of M bits may only be executed $(N/k)^2$ times. However, a necessary memory amount is $2^{2k}/k^2$ times the algorithm of (Example 2').

For example, when k = 1, the XOR operation of M bits is $120^2$ = 14400 times, a necessary memory amount is $2^2$ = 4 times (Example 2'), and the number of times of the loop is not changed. In addition, when k = 2, the XOR operation of M bits is $60^2$ = 3600 times, a necessary memory amount is $2^4/4$ = 4 times, and the number of times of the loop is 1/4. When k = 4, the XOR operation of M bits is $30^2$ = 900 times, a necessary memory amount is $2^8/4^2$ = 16 times, and the number of times of the loop is 1/16. When k = 6, the XOR operation of M bits is $20^2$ = 400 times, a necessary memory amount is $2^{12}/6^2$ = 114 times, and the number of times of the loop is 1/36. When k = 8, the XOR operation of M bits is $15^2$ = 225 times, a necessary memory amount is $2^{16}/8^2$ = 1024 times, and the number of times of the loop is 1/64.

(Example 3')

```
input x, y;

for I = 1 to N/k

    for J = 1 to N/k

        [1st to Mth bits of z] ^ = a(1 to M)IJ [k(I−1)+1st to kth bits of x]

[k(J−1)+1st to kth bits of y];

    end for

end for

output z;
```

Note that the technique shown in (Example 3') can be exactly said to be a technique in which the value of $G_{IJ}$ (...) defined in formula (14) below is calculated in advance and retained as an array.

[Math 12]

$$G(x_1, \cdots, x_n) = \sum_{I,J} G_{IJ}\left(x_{k(I-1)+1}, \cdots, x_{k(I-1)+k}, y_{k(J-1)+1}, \cdots, y_{k(J-1)+k}\right) = z$$

$$\cdots \quad (1\,4)$$

wherein, $F_{IJ}(x_{k(I-1)+1}, \cdots, x_{k(I-1)+k}, y_{k(J-1)+1}, \cdots, y_{k(J-1)+k})$ indicates a portion of $G(x_1, \cdots, x_N, y_1, \cdots, y_N)$ of which the value is decided by $[x_{k(I-1)+1}, \cdots, x_{k(I-1)+k}]$ and $[y_{k(J-1)+1}, \cdots, y_{k(J-1)+k}]$.

Hereinabove, the configuration of the detailed algorithm relating to the structuration technique #1 has been described exemplifying the case in which the multivariate polynomial G is calculated. With this configuration, speed-up in processing for execution of the algorithm can be expected.

(Regarding further efficiency of techniques relating to (Example 2) and (Example 2'))

Herein, the algorithm of (Example 2) described above will be referred to again. The algorithm of (Example 2) described above includes a dual loop process with regard to indices I and J. Thus, by developing research for the content of processing steps executed in a part of the loop process, a technique of reducing the number of times of arithmetic operations while obtaining the same result is proposed. In addition, a method of applying the same technique to (Example 2') will also be introduced.

(Application to F: First technique)

As a first technique, for example, a technique of extracting the term of [Ith bit of x] that does not relate to the index J from the inner loop (loop of J) and modifying the term as shown in (Example 2A) described below is proposed. Note that tmp is a variable for temporarily storing a value. When such modification is made, the AND operation (&) of M bits may be executed $1 \times N \times (N+1)/2$ times, and the XOR operation (^) of M bits may be executed $N \times (N+1)/2$ times in terms of the content of operations.

(Example 2A)

```
input x;
for I = 1 to N
    for J = 1 to N
        tmp^ = [a(1 to M)IJ] & [Jth bit of x];
    end for
    [1st to Mth bits of y]^ = tmp & [Ith bit of x];
end for
output y;
```

(Application to F: Second technique)

In addition, as a second technique, a technique of modifying the algorithm as shown in (Example 2B) described below using conditional branching so that, when the term of [Ith bit of x] is 0, output is considered not to be affected, and the inner loop process is executed only when, for example, [Ith bit of x] = 1 is proposed. When such modification is made, the AND operation (&) of M bits may be executed $1 \times N \times (N+3)/2 \times p$ times, and the XOR operation (^) of M bits may be executed $N \times (N+1)/2 \times p$ times in terms of the content of operations. Wherein, p represents a rate of setting [Ith bit of x] = 0.

(Example 2B)

```
input x;

for I = 1 to N

    if [I^th bit of x] = 1 then

    for J = I to N

        tmp^ = [a_(1 to M)IJ] & [J^th bit of x];

    end for

    [1^st to M^th bits of y]^ = tmp;

    end if

end for


            output y;
```

(Application to F: Third technique)

In addition, as a third technique, a technique of modifying the algorithm as shown in (Example 2C) described below using conditional branching so that, when the term of [J$^{th}$ bit of x] is 0, output is considered not to be affected, and the inner loop process is executed only when, for example, [J$^{th}$ bit of x] = 1 is proposed. When such modification is made, the number of times of operations can be further reduced.

(Example 2C)

```
input x;
for I = 1 to N
    if [Ith bit of x] = 1 then
    for J = I to N
        if [Jth bit of x] = 1 then
            tmp^ = [a(1 to M)IJ];
        end if
    end for
    [1st to Mth bits of y]^ = tmp;
    end if
end for
output y;
```

(Application to G: First technique)

The first to third techniques described above can also be applied to the algorithm of (Example 2') described above relating to the multivariate polynomial G in the same manner. For example, when the above-described first technique is applied to the algorithm of (Example 2') described above, the algorithm is modified as in (Example 2'A) below.

(Example 2'A)

```
input x, y;
for I = 1 to N
    for J = 1 to N
        tmp ^ = [a(1 to M)IJ+a(1 to M)JI] & [Jth bit of y];
    end for
    [1st to Mth bits of z] ^ = tmp & [Ith bit of x];
end for
output z;
```

(Application to G: Second technique)

In addition, the second technique described above is applied to the algorithm of (Example 2') described above. The algorithm of (Example 2') described above does not affect output when the term of [$I^{th}$ bit of x] is 0 either. Thus, when the algorithm is modified as in (Example 2'B) described below using conditional branching so that the inner loop process is executed only when [$I^{th}$ bit of x] = 1, the number of times of operations can be reduced.

(Example 2'B)

```
input x, y;
for I = 1 to N
    if [Iᵗʰ bit of x] = 1 then
    for J = 1 to N
        tmp^ = [a₍₁ to M₎IJ+a₍₁ to M₎JI] & [Jᵗʰ bit of y];
    end for
    [1ˢᵗ to Mᵗʰ bits of z]^ = tmp;
    end if
end for
output z;
```

(Application to G: Third technique)

In addition, the second technique described above is applied to the algorithm of (Example 2') described above. The algorithm of (Example 2') described above does not affect output when the term of [Jᵗʰ bit of y] is 0 either. Thus, when the algorithm is modified as in (Example 2'C) described below using conditional branching so that the inner loop process is executed only when [Jᵗʰ bit of y] = 1, the number of times of operations can be reduced.

(Example 2'C)

```
input x, y;

for I = 1 to N

    if [I^th bit of x] = 1 then

        for J = I+1 to N

            if [J^th bit of y] = 1 then

                tmp^ = a_(1 to M)IJ;

            end if

        end for

        for J=1 to I−1

            if [J^th bit of y] = 1 then

                tmp^ = a_(1 to M)JI;

            end if

        end for

        [1^st to M^th bits of z]^ = tmp;

    end if

end for

output z;
```

As described above, by applying the first to the third techniques, the number of times of operations in an algorithm in which coefficients are substituted can be reduced in the multivariate polynomial G.

(Consideration for security)

However, if the algorithm is modified to an algorithm in which a process is skipped as in the second and third techniques described above, there is a difference in processing times when a large number of 0s are included in the input x and when a small number of 0s are included in the input x. For this reason, by measuring processing times, information on the input x is obtained. In other words, when such an algorithm in which a process is skipped is applied, there is a risk of leakage of information on random numbers used in generation of signatures, and the like.

Therefore, in order to prevent such a risk, a technique in which a range of an allowable "ratio of 0 in the input x" (for example, equal to or lower than 10%, equal to higher than 90%, or the like) is set in advance, and when the ratio does not fall in the range, the random numbers are replaced is proposed. When the technique is applied, a process of replacing random numbers is executed when there are more 0s or fewer 0s than the set range. As a result, even if a processing time in which x is substituted in the polynomial F is measured, it is hard to get information on the input x leaked from the processing time.

Furthermore, in addition to the techniques described above, a technique giving a restriction that "the number of bits of 0 is substantially equal (or may be completely equal) to that of 1" to a secret key is considered. When this technique is applied, even using the above-described algorithm in which the process is skipped, the processing times can be uniform to some degree, and it is hard to get the information on the input x leaked from the processing times.

Herein, a specific case in which $F(r_0)$ and $G(r_1, t_0)$ are calculated will be considered. A secret key is set as s, $r_0$ and $t_0$ are set as random vectors, and $r_1 = s+r_0$ is set ("+" corresponds to XOR). In this case, if the numbers of bits of 0 and 1 are set to be equal in the secret key s, half bits of $r_1$ are reversed bits of $r_0$ regardless of the value of $r_0$. Then, in 2N bits constituted by $r_0$ (N bits) and $r_1$ (N bits), the number of bits of 0 is in the range of 0.5N to 1.5N. Consequently, in both $r_0$ and $r_1$, there is no case in which all bits are 0 or 1.

If the feature described above is used, even when the algorithm in which a process is skipped is applied, a total calculation time of $F(r_0)$ and $G(t_0, r_1)$ can be uniform. As an example, a case in which the algorithms of (Example 2C) and (Example 2'C) described above are applied is considered. In this case, calculation of the multivariate polynomial F is executed based on the algorithm of (Example 2C) and calculation of the multivariate polynomial G is executed based on the algorithm of (Example 2'C). Both algorithms are described again below.

When the multivariate polynomial $F(r_0)$ is calculated, the input $x = r_0$. When the multivariate polynomial $(r_1, t_0)$ is calculated, the input $x = r_1$. As in the above description, among the total of 2N bits of $r_0$ and $r_1$, the number of bits of 0s is the range of 0.5N to 1.5N. For this reason, in the conditional branching described in the 3rd row of the algorithm of (Example 2C) and the conditional branching described in the 3rd row of the algorithm of (Example 2'C) described below, the number of times in which a process is skipped is also in the range of 0.5N to 1.5N. Therefore, it is hard to cause the information on the input to leak from the total processing time of the multivariate polynomials F and G.

(Example 2C: re-described, row numbers are added)

```
1:      input x;
2:      for I = 1 to N
3:          if [Ith bit of x] = 1 then
4:              for J = I to N
5:                  if [Jth bit of x] = 1 then
6:                      tmp^ = [a(1 to M)IJ];
7:                  end if
8:              end for
9:              [1st to Mth bits of y]^ = tmp;
10:         end if
11:     end for

12:     output y;
```

(Example 2'C: re-described, row numbers are added)

```
1:      input x, y;
2:      for I = 1 to N
3:          if [Ith bit of x] = 1 then
4:              for J = I+1 to N
5:                  if [Jth bit of y] = 1 then
6:                      tmp^ = a(1 to M)IJ;
7:                  end if
8:              end for
9:              for J = 1 to I−1
10:                 if [Jth bit of y] = 1 then
11:                     tmp^ = a(1 to M)JI;
12:                 end if
13:             end for
14:             [1st to Mth bits of z]^ = tmp;
15:         end if
16:     end for
17:     output z;
```

Hereinabove, the structuration technique #1 has been described.

(5-2-2: Structuration technique #2)

Next, the structuration technique #2 will be described. The structuration technique #2 is a technique in which, when a substitution process is performed for the same multivariate polynomial N times (N ≥ 2), sequential processes are performed N times in units of a step of "generating some coefficients and performing the process relating to them N times" in a parallel manner, rather than performing the substitution process by generating the polynomial from random numbers N times. If this technique is applied, a through-put improves in the N times of the entire process when it is difficult to neglect costs for generating the random numbers.

For example, in the algorithm shown in FIG. 5, the multivariate polynomials F and G are repeatedly calculated N times while arguments are updated in Operation #1. Thus, arithmetic operations are configured to be repeatedly performed on the calculation part using a same coefficient. When the multivariate polynomial $F(r_{0i})$ (i = 1 to N) is calculated using the algorithm of (Example 2) and the like described above, it is configured such that all of N $r_{0i}$s are applied to $[a_{IJL}]$ generated once, and then a process relating to the next $[a_{IJL}]$ is performed. With this configuration, the same coefficient $[a_{IJL}]$ may not be generated N times. Of course, the structuration technique #2 can also be applied to the case in which the multivariate polynomial G is calculated in the same manner.

Hereinabove, the detailed substitution algorithm of the structuration technique #2 has been described. With this configuration, a total through-put in the N times of the process improves.

[5-3: Further efficiency achieved by pre-processing]

Here, a technique for performing pre-processing for further efficiency in calculation of the multivariate polynomials F and G will be described. This technique can be applied to, for example, (Example 2) described above to which the structuration technique #1 is applied. Hereinbelow, as an example of pre-processing, a process relating to data expression of an input x, a process relating to an index of disposition, and a process of commonizing calculation of the multivariate polynomials F and G will be described.

(5-3-1: Conversion of data expression)

First, pre-processing for converting data expression of an input x before calculation of the multivariate polynomials F and G is executed (hereinafter referred to as a data conversion process) will be described.

(Application to F)

For example, when inputs x of 128 bits are retained as four pieces of 32-bit integer-type data, a process in which [$I^{th}$ bit of x] is taken from the four 32-bit integers in the fourth row of the algorithm of (Example 2) and expanded to M bits occurs. If the process is executed each time the loop process is performed, the speed of the loop process decreases. Thus, a technique of generating data obtained by expanding [$I^{th}$ bit of x] of the inputs x to M bits before the loop process is executed and then preparing an array Q[I] having the data as an element is proposed. By applying this technique, the process of expanding one bit to M bits each time the loop process is performed is not necessary, and accordingly, the speed of the loop process increases.

(Example 2: re-described, row numbers are added)

```
1:      input x;
2:      for I = 1 to N
3:        for J = I to N
4:          [1st to Mth bits of y]^ = [a(1 to M)IJ] & [Ith bit of x] & [Jth bit of x];
5:          end for
6:        end for
7:      output y;
```

In addition, in the algorithm of (Example 3) described above, a process of taking [$(k(I-1)+1)^{th}$ to $k^{th}$ bits of x] each time the loop process is performed occurs. Thus, a technique of generating data obtained by expanding [$(k(I-1)+1)^{th}$ to $k^{th}$ bits of x] of the inputs x to M bits before the loop process is executed and then preparing an array Q[I] having the data as an element is proposed. By applying this technique, a process of taking the $k^{th}$ bit each time the loop process is performed is not necessary, and accordingly the speed of the loop process increases. Likewise, by performing the data conversion process for the algorithm relating to the structuration technique #1 described above, the speed of the loop process increases.

In addition, in the algorithm that causes a process to be skipped as in the second technique and the third technique, a list of the position in which [$I^{th}$ bit of x] is 1 is prepared in advance and the process can be made more efficient using the list in the structuration technique #1 described above. For example, when an array x'[I] indicating the position in which [$I^{th}$ bit of x] is 1 is prepared, the algorithm of (Example 2C) described above becomes (New example 2C) described below. In the example, w indicates the number of bits that are 1 in the inputs x. With this configuration, conditional division of the loop does not occur, and thus the speed of the loop process increases.

(New example 2C)

```
input x;

  for I = 1 to w

    for (J satisfying x'[J]>x'[I])

      [1st to Mth bits of y]^ = [a(1 to M)x'[I]x'[J]];

    end for

  end for

output y;
```

(Application to G)

Efficiency of an algorithm achieved by the data conversion process can also be applied to the calculation algorithm of the multivariate polynomial G in the same manner.

For example, when inputs x of 128 bits are retained as four pieces of 32-bit integer-type data, a process in which [$I^{th}$ bit of x] is taken from the four 32-bit integers in the fourth row of the algorithm of (Example 2') and expanded to M bits occurs. If the process is executed each time the loop process is performed, the speed of the loop process decreases. Thus, a technique of generating data obtained by expanding [$I^{th}$ bit of x] of the inputs x to M bits before the loop process is executed and then preparing an array Q[I] having the data as an element is proposed. By applying this technique, the process of expanding one bit to M bits each time the loop process is performed not necessary, and accordingly, the speed of the loop process increases.

(Example 2')

```
input x, y;

  for I = 1 to N

    for J = 1 to N

      [1st to Mth bits of z]^ = [a(1 to M)IJ+a(1 to M)JI] & [Ith bit of x] & [Jth bit of x];

    end for

  end for

output z;
```

In addition, in the algorithm of (Example 3') described above, a process of taking [$(k(I-1)+1)^{th}$ to $k^{th}$ bits of x] each time the loop process is performed occurs. Thus, a technique of generating data obtained by expanding [$(k(I-1)+1)^{th}$ to $k^{th}$ bits of x] of the inputs x to M bits before the loop process is executed and then preparing an array Q[I] having the data as an element is proposed. By applying this technique, a process of taking the $k^{th}$ bit each time the loop process is performed is not necessary, and accordingly the speed of the loop process increases. Likewise, by performing the data conversion process for the algorithm relating to the structuration technique #1 described above, the speed of the loop process increases.

In addition, in the algorithm that causes a process to be skipped as in the second technique and the third technique, a list of the position in which [$I^{th}$ bit of x] is 1 and the position in which [$J^{th}$ bit of y] is 1 are prepared in advance and the process can be made more efficient using the list in the structuration technique #1 described above. For example, when an array x'[I] indicating the position in which [$I^{th}$ bit of x] is 1 and an array y'[J] indicating the position in which [$J^{th}$ bit of y] is 1 are prepared, the algorithm of (Example 2'C) described above becomes (New example 2'C) described below. In the example, $w_x$ indicates the number of bits that are 1 in the inputs x. In the example, $w_y$ indicates the number of bits that are 1 in the inputs y. With this configuration, conditional division of the loop does not occur, and thus the speed of the loop process increases.

(New example 2'C)

```
input x, y;
  for I = 1 to wx
    for (J satisfying x'[I]<y'[J])
      [1st to Mth bits of z]^ = a(1 to M)x'[I]y'[J];
    end for
    for (J satisfying y'[I]<x'[J])
      [1st to Mth bits of z]^ = a(1 to M)y'[I]x'[J];
    end for
  end for
output z;
```

Hereinabove, the data conversion process has been described.

(5-3-2: Expression of an index)

Next, pre-processing that can be applied to a technique of retaining the intermediate results to which the coefficients of the multivariate polynomials F and G are applied in a table will be described. In the algorithm of (Example 3) described above, for example, it is necessary to retain the intermediate results in a four-dimensional array. In addition, in order to access the four-dimensional array, it is necessary to calculate many indices.

For example, in the case of a four-dimensional array $A[a_1][a_2][a_3][a_4]$ ($a_1$ = 1 to a, $a_2$ = 1 to b, $a_3$ = 1 to c, and $a_4$ = 1 to d), in order to access A[I][J][K][L], it is necessary to calculate the indices of $b \times c \times d \times 1 + c \times d \times 1 + d \times K + L$. Thus, a technique of making the calculation of the index efficient is proposed.

For example, the algorithm of (Example 3) described above can be expressed as follows using a four-dimensional array $A[\cdot][\cdot][\cdot][\cdot]$ in which the intermediate results are retained.

(Example 3: Expression using a four-dimensional array A)

```
1:       input x;

2:       for I = 1 to N/k

3:         for J = I to N/k

4:           [1st to Mth bits of y]^ = A(1 to M)[I][J][xk(I−1)+1 … xk(I−1)+k][xk(J−1)+1 … xk(J−1)+k];

5:         end for

6:       end for

7:       output y;
```

Here, the positions of the indices of the four-dimensional array A described in the fourth row of (Example 3) described above should be focused on. In the algorithm of (Example 3) described above, even if data is retained in an array in which the positions of the indices are switched as follows, there is no problem in calculation of the algorithm.

(After switching)

$$A_{(1 \text{ to } M)}[I][x_{k(I-1)+1} \ldots x_{k(I-1)+k}][J][x_{k(J-1)+1} \ldots x_{k(J-1)+k}];$$

Furthermore, even when the four-dimensional array A is expressed in a two-dimensional array as follows, the calculation result of the algorithm is the same. Thus, if the value of $2^k \times I + x_{k(I-1)+1} \ldots x_{k(I-1)+k}$ is calculated with respect to I = 1, ..., N/k in advance and used at the time of the loop process, it is not necessary to sequentially calculate the indices in the loop process, and thus the calculation becomes efficient.

(After change to a two-dimensional array)

$$A_{(1 \text{ to } M)}[2^k \times I + x_{k(I-1)+1} \ldots x_{k(I-1)+k}][2^k \times J + x_{k(J-1)+1} \ldots x_{k(J-1)+k}];$$

Hereinabove, the pre-process that devises the expression of indices has been described. As described above, an amount of an arithmetic operation can be reduced by calculating indices to an intermediate degree, commonizing a part of the calculation of the indices, or the like. Note that the pre-processing that devises the expression of indices in the calculation of the multivariate polynomial F has been described herein, and the same can apply to calculation of the multivariate polynomial G.

(5-3-3: Commonization of pre-processing)

However, in the signature verifying algorithm previously described, the multivariate polynomials F(x) and G(x, y) may be calculated together for a common input x. In this case, the above-described pre-processing with regard to the calculation of the multivariate polynomials F(x) and G(x, y) can be commonized. For example, in the above-described data conversion process, when the array Q[I] having the data obtained by expanding [Ith bit of x] to M bits as an element is prepared, it can be used in calculation of either of the multivariate polynomials F(x) and G(x, y). With this configuration, the effect of the pre-processing further improves.

In the same manner, when data obtained by expanding [(k(I-1)+1)th to kth bits of x] to M bits is generated and the array Q[I] having the data as an element is prepared, it can be used in calculation of either of the multivariate polynomials F(x) and G(x, y). With this configuration, the effect of the pre-processing further improves. Furthermore, when an array x'[I] indicating the position in which [I$^{th}$ bit of x] is 1 is prepared, it can also be used in calculation of either of the multivariate polynomials F(x) and G(x, y). With this configuration, the effect of the pre-processing further improves.

Hereinabove, further efficiency achieved by the pre-processing has been described.

<8: Hardware configuration example (FIG. 12)>

Each algorithm described above can be performed by using, for example, the hardware configuration of the information processing apparatus shown in FIG. 12. That is, processing of each algorithm can be realized by controlling the hardware shown in FIG. 12 using a computer program. Additionally, the mode of this hardware is arbitrary, and may be, for example, a personal computer, a mobile information terminal such as a mobile phone, a PHS or a PDA, a game machine, a contact or contactless IC chip, a contact or contactless IC card, or various types of information appliances. Moreover, the PHS is the abbreviation for Personal Handy-phone System. Also, the PDA is the abbreviation for Personal Digital Assistant.

As shown in FIG. 12, this hardware mainly includes the CPU 902, the ROM 904, the RAM 906, a host bus 908, and a bridge 910. Furthermore, this hardware includes an external bus 912, an interface 914, an input unit 916, an output unit 918, the storage unit 920, a drive 922, a connection port 924, and a communication unit 926. Moreover, the CPU is the abbreviation for Central Processing Unit. Also, the ROM is the abbreviation for Read Only Memory. Furthermore, the RAM is the abbreviation for Random Access Memory.

The CPU 902 functions as an arithmetic processing unit or a control unit, for example, and controls entire operation or a part of the operation of each structural element based on various programs recorded on the ROM 904, the RAM 906, the storage unit 920, or the removable recording medium 928. The ROM 904 is means for storing a program to be read by the CPU 902 or data or the like used in an arithmetic operation. The RAM 906 temporarily or perpetually stores, for example, a program to be read by the CPU 902 or various parameters or the like arbitrarily changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote controller (hereinafter, a remote controller) that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. Moreover, the CRT is the abbreviation for Cathode Ray Tube. The LCD is the abbreviation for Liquid Crystal Display. In addition, the PDP is the abbreviation for Plasma Display Panel. Also, the ELD is the abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is the abbreviation for Hard Disk Drive.

The drive 922 is a device that reads information recorded on the removable recording medium 928, for example, a magnetic disk, an optical disk, a magneto-optical disk, or a semiconductor memory, or writes information in the removable recording medium 928. The removable recording medium 928 is, for example, a DVD medium, a Blu-ray medium, an HD DVD medium, various types of semiconductor storage media, or the like. Of course, the removable recording medium 928 may be, for example, an electronic device or an IC card on which a non-contact IC chip is mounted. The IC is the abbreviation for Integrated Circuit.

The connection port 924 is, for example, a USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. The USB is the abbreviation for Universal Serial Bus. Also, the SCSI is the abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for contact or non-contact communication. In addition, the network 932 connected to the communication unit 926 is configured to be a wire-connected or wirelessly connected network, and is the Internet, a home-use LAN, infrared communication, visible light communication, broadcasting, or satellite communication, for example. The LAN is the abbreviation for Local Area Network. Also, the WUSB is the abbreviation for Wireless USB. Furthermore, the ADSL is the abbreviation for Asymmetric Digital Subscriber Line.

<9: Summary>

Lastly, the technical content according to the embodiment of the present technology will be briefly described.

The technical content stated here can be applied to various information processing apparatuses, for example, a PC, a mobile phone, a game machine, an information terminal, an information home appliance, a car navigation system, and the like. Note that the function of the information processing apparatus described below can be realized by using a single information processing apparatus or using a plurality of information processing apparatuses. Furthermore, data storage means and arithmetic operation processing means which are used for performing a process by the information processing apparatus described below may be installed in the information processing apparatus, or may be installed in a device connected via a network.

The functional configuration of the information processing apparatus is expressed as follows. For example, the information processing apparatus described in (1) below has the function of executing the efficient algorithm of the public-key authentication scheme or the digital signature scheme that takes difficulty in solving a multi-order multivariate simultaneous equation as a base of security.

(1) An information processing apparatus including:

a number acquisition unit configured to acquire a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F; and

a polynomial calculation unit configured to calculate a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired by the number acquisition unit to the coefficients of the multi-order multivariate in units of groups, and executing a process in units of the groups,

wherein the polynomial calculation unit expands the input value of the variable to the same number as a number of a coefficient corresponding to one group so that the process in units of the groups is enabled before the calculation is executed.

(2) The information processing apparatus according to (1), further including:

a table retaining unit configured to retain, in a table, the values obtained by substituting the variables of the terms with arbitrary numbers by allocating the coefficients to terms of types corresponding to each of the groups.

(3) The information processing apparatus according to (2), wherein the polynomial calculation unit executes a part of or the entire calculation of indices used when a value is acquired from the table before the calculation is executed.

(4) The information processing apparatus according to any one of (1) to (3), wherein the polynomial calculation unit commonly uses the input value of the variable expanded before the calculation is executed when a plurality of types of multi-order multivariate polynomials are calculated.

(5) The information processing apparatus according to (3), wherein the polynomial calculation unit commonly uses results of the calculation of the indices executed before the calculation is executed when the plurality of types of multi-order multivariate polynomials are calculated.

(6) The information processing apparatus according to any one of (1) to (5), wherein the polynomial calculation unit skips a calculation process for a term in which the input value of at least one variable is 0.

(7) The information processing apparatus according to (6), wherein the input value of the variable is a value generated such that a ratio of an input value of 0 among all input values is within a predetermined range.

(8) The information processing apparatus according to (7), wherein the input value of the variable is a value generated using a random number generator, and is re-generated using the random number generator when the ratio of the input value of 0 among all input values is not within the predetermined range.

(9) The information processing apparatus according to (6), wherein the input value of the variable is expressed by a first or a second bit value different from each other, and a number of input values having the first bit value and a number of input values having the second bit value among all input values are substantially equal.

(10) The information processing apparatus according to any one of (1) to (9),

wherein the information is a seed of a random number, and

wherein the predetermined function is a random number generator configured to generate a random number using the seed.

(11) The information processing apparatus according to any one of (1) to (10), including:

a message generation unit configured to generate a message based on the set of the multi-order multivariate

polynomial $F = (f_1, ..., f_m)$ defined on a ring K and a vector $s \in K^n$;

a message provision unit configured to provide the message to a verifier that retains the set of the multi-order multivariate polynomial F and a vector $y = (y_1, ..., y_m) = (f_1(s), ..., f_m(s))$; and

a reply provision unit configured to provide the verifier with reply information corresponding to a verification pattern selected by the verifier from among k ($k \geq 3$) verification patterns,

wherein the vector s is a secret key,

wherein the set of the multi-order multivariate polynomial F and the vector y are public keys,

wherein the reply information is information selected according to the verification pattern from pairs of the random numbers and the message, and

wherein the message is information obtained by executing an arithmetic operation prepared in advance for a verification pattern corresponding to the reply information using the public keys and the reply information.

(12) The information processing apparatus according to any one of (1) to (10), including:

an information retaining unit configured to retain the set of the multi-order multivariate polynomial $F = (f_1, ..., f_m)$ defined on a ring K and a vector $y = (y_1, ..., y_m) = (f_1(s), ..., f_m(s))$;

a message acquisition unit configured to acquire a message generated based on the set of the multi-order multivariate polynomial F and a vector $s \in K^n$;

a pattern information provision unit configured to provide a prover that has provided the message with information of one verification pattern selected at random from among k ($k \geq 3$) verification patterns;

a reply acquisition unit configured to acquire reply information corresponding to the selected verification pattern from the prover; and

a verifying unit configured to verify whether or not the prover retains the vector s based on the message, the set of the multi-order multivariate polynomial F, the vector y, and the reply information,

wherein the vector s is a secret key,

wherein the set of the multi-order multivariate polynomial F and the vector y are public keys, and

wherein the message is information obtained by executing an arithmetic operation prepared in advance for a verification pattern corresponding to the reply information using the public keys and the reply information.

(13) The information processing apparatus according to any one of (1) to (10), including:

a message generation unit configured to generate a message based on the set of the multi-order multivariate polynomial $F = (f_1, ..., f_m)$ defined on a ring K and a vector $s \in K^n$;

a message provision unit configured to provide the message to a verifier that retains the set of the multi-order multivariate polynomial F and a vector $y = (y_1, ..., y_m) = (f_1(s), ..., f_m(s))$;

an intermediate information generation unit configured to generate, using first information selected by the verifier at random and second information obtained when the message is generated, third information;

an intermediate information provision unit configured to provide the third information to the verifier; and

a reply provision unit configured to provide the verifier with reply information corresponding to a verification pattern selected by the verifier from among k ($k \geq 2$) verification patterns,

wherein the vector s is a secret key,

wherein the set of the multi-order multivariate polynomial F and the vector y are public keys,

wherein the reply information is information selected according to the verification pattern from the message, and

wherein the message is information obtained by executing an arithmetic operation prepared in advance for a verification pattern corresponding to the reply information using the public keys, the first information, the third information, and the reply information.

(14) The information processing apparatus according to any one of (1) to (10), including:

an information retaining unit configured to retain the set of the multi-order multivariate polynomial $F = (f_1, ..., f_m)$ defined on a ring K and a vector $y = (y_1, ..., y_m) = (f_1(s), ..., f_m(s))$;

a message acquisition unit configured to acquire a message generated based on the set of the multi-order multivariate polynomial F and a vector $s \in K^n$;

an information provision unit configured to provide first information selected at random to a prover that provides the message;

an intermediate information acquisition unit configured to acquire, using the first information and second information obtained when the message is generated, third information generated by the prover;

a pattern information provision unit configured to provide the prover with information of one verification pattern selected at random from among k (k ≥ 3) verification patterns;
a reply acquisition unit configured to acquire reply information corresponding to the selected verification pattern from the prover; and
a verifying unit configured to verify whether or not the prover retains the vector s based on the message, the first information, the third information, the set of the multi-order multivariate polynomial F, and the reply information,
wherein the vector s is a secret key,
wherein the set of the multi-order multivariate polynomial F and the vector y are public keys, and
wherein the message is information obtained by executing an arithmetic operation prepared in advance for a verification pattern corresponding to the reply information using the public keys, the first information, the third information, and the reply information.

(15) The information processing apparatus according to any one of (1) to (10),
wherein, when the algorithm is repeatedly performed a plurality of times, the number acquisition unit acquires the number generated only once and the polynomial calculation unit performs the allocation process only once, and
wherein the algorithm repeatedly uses the coefficients allocated by the allocation unit.
(16) The information processing apparatus according to any one of (1) to (10), including:

a signature generation unit configured to generate a digital signature for a message M using the set of the multi-order multivariate polynomial $F = (f_1, ..., f_m)$ defined on a ring K and a signature key $s \in K^n$; and
a signature provision unit configured to provide the digital signature to a verifier that retains the set of the multi-order multivariate polynomial F and a vector $y = (f_1(s), ..., f_m(s))$.

(17) An information processing method including:

acquiring a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F; and
calculating a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the acquired number to the coefficients of the multi-order multivariate in units of groups, and executing a process in units of the groups,
wherein, in the calculation, the input value of the variable is expanded to the same number as a number of a coefficient corresponding to one group so that the process in units of the groups is enabled before the calculation is executed.

(18) A program causing a computer to realize:

a number acquisition function of acquiring a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F; and
a polynomial calculation function of calculating a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired through the number acquisition function to the coefficients of the multi-order multivariate in units of groups, and executing a process in units of the groups,
wherein the polynomial calculation function causes the input value of the variable to expand to the same number as a number of a coefficient corresponding to one group so that the process in units of the groups is enabled before the calculation is executed.

(19) A computer-readable recording medium on which the program according to (18) is recorded.

(Remarks)

The prover algorithm P, verifier algorithm V, signature generation algorithm Sig, and signature verifying algorithm Ver described above are examples of a number generation unit, a polynomial calculation unit, and a table retaining unit. The prover algorithm P described above is an example of a message generation unit, a message provision unit, a reply provision unit, an intermediate information generation unit, and an intermediate information provision unit. In addition, the verifier algorithm V described above is an example of an information retaining unit, a message acquisition unit, a pattern information provision unit, a replay acquisition unit, a verifying unit, and an intermediate information acquisition unit.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

In the above description, the algorithms using the hash function H have been introduced, but a commitment function COM may be used instead of the hash function H. The commitment function COM is a function that takes a character string S and a random number p as arguments. As an example of the commitment function, there is a scheme presented by Shai Halevi and Silvio Micali at the international conference CRYPTO in 1996.

Reference Signs List

| | |
|---|---|
| Gen | key generation algorithm |
| P | prover algorithm |
| V | verifier algorithm |
| Sig | signature generation algorithm |
| Ver | signature verifying algorithm |

**Claims**

**1.** An information processing apparatus comprising:

a number acquisition unit configured to acquire a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F; and

a polynomial calculation unit configured to calculate a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired by the number acquisition unit to the coefficients of the multi-order multivariate in units of groups, and executing a process in units of the groups,

wherein the polynomial calculation unit expands the input value of the variable to the same number as a number of a coefficient corresponding to one group so that the process in units of the groups is enabled before the calculation is executed.

**2.** The information processing apparatus according to claim 1, further comprising:

a table retaining unit configured to retain, in a table, the values obtained by substituting the variables of the terms with arbitrary numbers by allocating the coefficients to terms of types corresponding to each of the groups.

**3.** The information processing apparatus according to claim 2, wherein the polynomial calculation unit executes a part of or the entire calculation of indices used when a value is acquired from the table before the calculation is executed.

**4.** The information processing apparatus according to claim 1, wherein the polynomial calculation unit commonly uses the input value of the variable expanded before the calculation is executed when a plurality of types of multi-order multivariate polynomials are calculated.

**5.** The information processing apparatus according to claim 3, wherein the polynomial calculation unit commonly uses results of the calculation of the indices executed before the calculation is executed when the plurality of types of multi-order multivariate polynomials are calculated.

**6.** The information processing apparatus according to claim 1, wherein the polynomial calculation unit skips a calculation process for a term in which the input value of at least one variable is 0.

**7.** The information processing apparatus according to claim 6, wherein the input value of the variable is a value generated such that a ratio of an input value of 0 among all input values is within a predetermined range.

**8.** The information processing apparatus according to claim 7, wherein the input value of the variable is a value generated using a random number generator, and is re-generated using the random number generator when the ratio of the input value of 0 among all input values is not within the predetermined range.

**9.** The information processing apparatus according to claim 6, wherein the input value of the variable is expressed by a first or a second bit value different from each other, and a number of input values having the first bit value and a number of input values having the second bit value among all input values are substantially equal.

**10.** The information processing apparatus according to claim 1,
wherein the information is a seed of a random number, and
wherein the predetermined function is a random number generator configured to generate a random number using the seed.

**11.** The information processing apparatus according to claim 1, comprising:

a message generation unit configured to generate a message based on the set of the multi-order multivariate polynomial $F = (f_1, ..., f_m)$ defined on a ring K and a vector $s \in K^n$;
a message provision unit configured to provide the message to a verifier that retains the set of the multi-order multivariate polynomial F and a vector $y = (y_1, ..., y_m) = (f_1(s), ..., f_m(s))$; and
a reply provision unit configured to provide the verifier with reply information corresponding to a verification pattern selected by the verifier from among k ($k \geq 3$) verification patterns,
wherein the vector s is a secret key,
wherein the set of the multi-order multivariate polynomial F and the vector y are public keys,
wherein the reply information is information selected according to the verification pattern from pairs of the random numbers and the message, and
wherein the message is information obtained by executing an arithmetic operation prepared in advance for a verification pattern corresponding to the reply information using the public keys and the reply information.

**12.** The information processing apparatus according to claim 1, comprising:

an information retaining unit configured to retain the set of the multi-order multivariate polynomial $F = (f_1, ..., f_m)$ defined on a ring K and a vector $y = (y_1, ..., y_m) = (f_1(s), ..., f_m(s))$;
a message acquisition unit configured to acquire a message generated based on the set of the multi-order multivariate polynomial F and a vector $s \in K^n$;
a pattern information provision unit configured to provide a prover that has provided the message with information of one verification pattern selected at random from among k ($k \geq 3$) verification patterns;
a reply acquisition unit configured to acquire reply information corresponding to the selected verification pattern from the prover; and
a verifying unit configured to verify whether or not the prover retains the vector s based on the message, the set of the multi-order multivariate polynomial F, the vector y, and the reply information,
wherein the vector s is a secret key,
wherein the set of the multi-order multivariate polynomial F and the vector y are public keys, and
wherein the message is information obtained by executing an arithmetic operation prepared in advance for a verification pattern corresponding to the reply information using the public keys and the reply information.

**13.** The information processing apparatus according to claim 1, comprising:

a message generation unit configured to generate a message based on the set of the multi-order multivariate polynomial $F = (f_1, ..., f_m)$ defined on a ring K and a vector $s \in K^n$;
a message provision unit configured to provide the message to a verifier that retains the set of the multi-order multivariate polynomial F and a vector $y = (y_1, ..., y_m) = (f_1(s), .... f_m(s))$;
an intermediate information generation unit configured to generate, using first information selected by the verifier at random and second information obtained when the message is generated, third information;
an intermediate information provision unit configured to provide the third information to the verifier; and
a reply provision unit configured to provide the verifier with reply information corresponding to a verification pattern selected by the verifier from among k (k ≥ 2) verification patterns,
wherein the vector s is a secret key,
wherein the set of the multi-order multivariate polynomial F and the vector y are public keys,
wherein the reply information is information selected according to the verification pattern from the message, and
wherein the message is information obtained by executing an arithmetic operation prepared in advance for a verification pattern corresponding to the reply information using the public keys, the first information, the third information, and the reply information.

**14.** The information processing apparatus according to claim 1, comprising:

an information retaining unit configured to retain the set of the multi-order multivariate polynomial $F = (f_1, ..., f_m)$ defined on a ring K and a vector $y = (y_1, ..., y_m) = (f_1(s), .... f_m(s))$;
a message acquisition unit configured to acquire a message generated based on the set of the multi-order multivariate polynomial F and a vector $s \in K^n$;
an information provision unit configured to provide first information selected at random to a prover that provides the message;
an intermediate information acquisition unit configured to acquire, using the first information and second information obtained when the message is generated, third information generated by the prover;
a pattern information provision unit configured to provide the prover with information of one verification pattern selected at random from among k (k ≥ 3) verification patterns;
a reply acquisition unit configured to acquire reply information corresponding to the selected verification pattern from the prover; and
a verifying unit configured to verify whether or not the prover retains the vector s based on the message, the first information, the third information, the set of the multi-order multivariate polynomial F, and the reply information,
wherein the vector s is a secret key,
wherein the set of the multi-order multivariate polynomial F and the vector y are public keys, and
wherein the message is information obtained by executing an arithmetic operation prepared in advance for a verification pattern corresponding to the reply information using the public keys, the first information, the third information, and the reply information.

**15.** The information processing apparatus according to claim 1,
wherein, when the algorithm is repeatedly performed a plurality of times, the number acquisition unit acquires the number generated only once and the polynomial calculation unit performs the allocation process only once, and
wherein the algorithm repeatedly uses the coefficients allocated by the allocation unit.

**16.** The information processing apparatus according to claim 1, comprising:

a signature generation unit configured to generate a digital signature for a message M using the set of the multi-order multivariate polynomial $F = (f_1, ..., f_m)$ defined on a ring K and a signature key $s \in K^n$; and
a signature provision unit configured to provide the digital signature to a verifier that retains the set of the multi-order multivariate polynomial F and a vector $y = (f_1(s), ..., f_m(s))$.

**17.** An information processing method comprising:

acquiring a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F; and
calculating a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the acquired number to the coefficients of the multi-order multivariate in units of groups, and executing a process in units of the groups,
wherein, in the calculation, the input value of the variable is expanded to the same number as a number of a coefficient corresponding to one group so that the process in units of the groups is enabled before the calculation is executed.

18. A program causing a computer to realize:

a number acquisition function of acquiring a number used for a coefficient of each term constituting a set of a multi-order multivariate polynomial $F = (f_1, ..., f_m)$, the number generated using a predetermined function from information shared between entities that execute an algorithm of a public-key authentication scheme or a digital signature scheme that uses a public key including the set of the multi-order multivariate polynomial F; and a polynomial calculation function of calculating a multi-order multivariate polynomial for an input value of a variable by grouping coefficients of terms in which types of combinations of variables are the same among coefficients of the multi-order multivariate polynomial that includes the set of the multi-order multivariate polynomial F as a structural element, allocating the number acquired through the number acquisition function to the coefficients of the multi-order multivariate in units of groups, and executing a process in units of the groups, wherein the polynomial calculation function causes the input value of the variable to expand to the same number as a number of a coefficient corresponding to one group so that the process in units of the groups is enabled before the calculation is executed.

# FIG. 1

PUBLIC-KEY AUTHENTICATION SCHEME

# FIG. 2

DIGITAL SIGNATURE SCHEME

# FIG. 3

n-PASS PUBLIC-KEY AUTHENTICATION SCHEME

# FIG. 4

pk: (F, y)

ALGORITHM OF 3-PASS SCHEME

sk: $s \in_R K^n$ ----→ PROVER  VERIFIER

## OPERATION #1

$(r_0, t_0) \in_R K^n, e_0 \in_R K^m$
$r_1 \leftarrow s - r_0, t_1 \leftarrow r_0 - t_0$
$e_1 \leftarrow F(r_0) - e_0$
$c_0 \leftarrow H( r_1, G(t_0, r_1) + e_0 )$
$c_1 \leftarrow H( t_0, e_0 )$
$c_2 \leftarrow H( t_1, e_1 )$

$(c_0, c_1, c_2)$

## OPERATION #2

$Ch \in_R \{0, 1, 2\}$

Ch

## OPERATION #3

if Ch=0 then Rsp← $(r_0, t_1, e_1)$
if Ch=1 then Rsp← $(r_1, t_0, e_0)$
if Ch=2 then Rsp← $(r_1, t_1, e_1)$

Rsp

## OPERATION #4

if Ch=0 then
$( r_0, t_1, e_1 ) \leftarrow$ Rsp
check
$c_1 = H( r_0 - t_1, F(r_0) - e_1 )$,
$c_2 = H( t_1, e_1 )$
if Ch=1 then
$( r_1, t_0, e_0 ) \leftarrow$ Rsp
check
$c_0 = H( r_1, G(t_0, r_1) + e_0 )$
$c_1 = H( t_0, e_0 )$
if Ch=2 then
$( r_1, t_1, e_1 ) \leftarrow$ Rsp
check
$c_0 = H( r_1, y - F(r_1) - G(t_1, r_1) - e_1 )$
$c_2 = H( t_1, e_1 )$

## FIG. 5

pk: (F, y)

PROVER    VERIFIER

PARALLELIZED ALGORITHM OF 3-PASS SCHEME

sk: $s \in_R K^n$ ----→

### OPERATION #1

```
for i = 1 to N
    (r_{0i}, t_{0i}) ∈_R K^n, e_{0i} ∈_R K^m
    r_{1i} ← s - r_{0i}, t_{1i} ← r_{0i} - t_{0i}
    e_{1i} ← F(r_{0i}) - e_{0i}
    c_{0i} ← H( r_{1i}, G(t_{0i}, r_{1i}) + e_{0i} )
    c_{1i} ← H( t_{0i}, e_{0i} )
    c_{2i} ← H( t_{1i}, e_{1i} )
end for
Cmt ← H( c_{01}, c_{11}, c_{21}, ···, c_{0N}, c_{1N}, c_{2N} )
```

Cmt

$Ch_1, ···, Ch_N$

### OPERATION #2

```
( Ch_1, ···, Ch_N ) ∈_R {0, 1, 2}
```

### OPERATION #3

```
for i = 1 to N
    if Ch_i=0 then Rsp_i ← ( r_{0i}, t_{1i}, e_{1i}, c_{0i} )
    if Ch_i=1 then Rsp_i ← ( r_{1i}, t_{0i}, e_{0i}, c_{2i} )
    if Ch_i=2 then Rsp_i ← ( r_{1i}, t_{1i}, e_{1i}, c_{1i} )
end for
```

$Rsp_1, ···, Rsp_N$

### OPERATION #4

```
for i = 1 to N
    if Ch_i=0 then
        ( r_{0i}, t_{1i}, e_{1i}, c_{0i} ) ← Rsp_i
        c_{1i} = H( r_{0i} - t_{1i}, F(r_{0i}) - e_{1i} )
        c_{2i} = H( t_{1i}, e_{1i} )
    if Ch_i=1 then
        (r_{1i}, t_{0i}, e_{0i}, c_{2i}) ← Rsp_i
        c_{0i} = H( r_{1i}, G(t_{0i}, r_{1i}) + e_{0i} )
        c_{1i} = H( t_{0i}, e_{0i} )
    if Ch_i=2 then
        (r_{1i}, t_{1i}, e_{1i}, c_{1i}) ← Rsp_i
        c_{0i} = H( r_{1i}, y - F(r_{1i}) - G(t_{1i}, r_{1i}) - e_{1i} )
        c_{2i} = H( t_{1i}, e_{1i} )
end for
check
    Cmt = H( c_{01}, c_{11}, c_{21}, ···, c_{0N}, c_{1N}, c_{2N})
```

EP 2 822 218 A1

## FIG. 6

pk: (F, y)

sk: $s \in_R K^n$ - - - - ▶ PROVER    VERIFIER

<span style="float:right">ALGORITHM OF 5-PASS SCHEME</span>

OPERATION #1

$r_0, t_0 \in_R K^n, e_0 \in_R K^m$
$r_1 \leftarrow s - r_0$
$c_0 \leftarrow H( r_0, t_0, e_0 )$
$c_1 \leftarrow H( r_1, G(t_0, r_1) + e_0 )$

$(c_0, c_1)$

OPERATION #2

$Ch_A \in_R K$

$Ch_A$

OPERATION #3

$t_1 \leftarrow Ch_A \cdot r_0 - t_0$
$e_1 \leftarrow Ch_A \cdot F(r_0) - e_0$

$(t_1, e_1)$

OPERATION #4

$Ch_B \in_R \{0,1\}$

$Ch_B$

OPERATION #5

if $Ch_B = 0$ then $Rsp \leftarrow r_0$
if $Ch_B = 1$ then $Rsp \leftarrow r_1$

$Rsp$

OPERATION #6

if $Ch_B = 0$ then $r_0 \leftarrow Rsp$
    check
        $c_0 = H(r_0, Ch_A \cdot r_0 - t_1, Ch_A \cdot F(r_0) - e_1)$
if $Ch_B = 1$ then $r_1 \leftarrow Rsp$
    check
        $c_1 = H( r_1, Ch_A \cdot ( y - F(r_1) ) - G(t_1, r_1) - e_1 )$

EP 2 822 218 A1

# FIG. 7

PROVER   VERIFIER

PARALLELIZED ALGORITHM OF 5-PASS SCHEME

$sk: s \in_R K^n$

OPERATION #1

for i = 1 to N
$\quad r_{0i}, t_{0i} \in_R K^n, e_{0i} \in_R K^m$
$\quad r_{1i} \leftarrow s - r_{0i}$
$\quad c_{0i} \leftarrow H( r_{0i}, t_{0i}, e_{0i} )$
$\quad c_{1i} \leftarrow H( r_{1i}, G(t_{0i}, r_{1i}) + e_{0i} )$
end for
$Cmt \leftarrow H( c_{01}, c_{11}, \cdots, c_{0N}, c_{1N} )$

Cmt →

OPERATION #2

$( Ch_{A1}, \cdots, Ch_{AN} ) \in_R K$

← $(Ch_{A1}, \cdots, Ch_{AN})$

OPERATION #3

for i = 1 to N
$\quad t_{1i} \leftarrow Ch_{Ai} \cdot r_{0i} - t_{0i}$
$\quad e_{1i} \leftarrow Ch_{Ai} \cdot F(r_{0i}) - e_{0i}$
end for
$d \leftarrow H(t_{11}, e_{11}, \cdots, t_{1N}, e_{1N})$

d →

OPERATION #4

$( Ch_{B1}, \cdots, Ch_{BN} ) \in_R \{0,1\}$

← $(Ch_{B1}, \cdots, Ch_{BN})$

OPERATION #5

for i = 1 to N
$\quad$ if $Ch_{Bi} = 0$ then $Rsp_i \leftarrow (r_{0i}, t_{0i}, e_{0i}, c_{1i})$
$\quad$ if $Ch_{Bi} = 1$ then $Rsp_i \leftarrow (r_{1i}, t_{1i}, e_{1i}, c_{0i})$
end for

$(Rsp_1, \cdots, Rsp_N)$ →

OPERATION #6

for i = 1 to N
$\quad$ if $Ch_{Bi} = 0$ then $(r_{0i}, t_{0i}, e_{0i}, c_{1i}) \leftarrow Rsp_i$
$\quad\quad c_{0i} = H(r_{0i}, t_{0i}, e_{0i})$
$\quad\quad t_{1i} \leftarrow Ch_{Ai} \cdot r_{0i} + t_{0i}, e_{1i} \leftarrow Ch_{Ai} \cdot F(r_{0i}) - e_{0i}$
$\quad$ if $Ch_{Bi} = 1$ then $(r_{1i}, t_{1i}, e_{1i}, c_{0i}) \leftarrow Rsp_i$
$\quad\quad c_{1i} = H( r_{1i}, Ch_{Ai} \cdot ( y - F(r_{1i}) ) - G(t_{1i}, r_{1i}) - e_{1i} )$
end for
check $\quad Cmt = H( c_{01}, c_{11}, \cdots, c_{0N}, c_{1N} )$
$\quad\quad\quad d = H( t_{11}, e_{11}, \cdots, t_{1N}, e_{1N} )$

# FIG. 8

pk = (F, y)

sk = s ----→ PROVER    VERIFIER

MODIFICATION TO DIGITAL SIGNATURE SCHEME
(3-PASS)

## OPERATION #1

$a_i = ( r_{0i}, t_{0i}, e_{0i}, r_{1i}, t_{1i}, e_{1i}, c_{0i}, c_{1i}, c_{2i} )$
$Cmt \leftarrow H( c_{01}, c_{11}, c_{21}, \cdots, c_{0N}, c_{1N}, c_{2N} )$

Cmt →

## OPERATION #2

Select $Ch_1, \cdots, Ch_N$

$Ch_1, \cdots, Ch_N$ ←

## OPERATION #3

$Rsp_i \leftarrow Select( Ch_i, a_i )$

$Rsp_1, \cdots, Rsp_N$ →

## OPERATION #4

$(c_{01}, c_{11}, c_{21}, \cdots, c_{0N}, c_{1N}, c_{2N}) \leftarrow$
      $Reproduce(Ch_1, \cdots, Ch_N, Rsp_1, \cdots, Rsp_N)$
check  $Cmt = H(c_{01}, c_{11}, c_{21}, \cdots, c_{0N}, c_{1N}, c_{2N})$

⬇ MESSAGE M

### SIGNATURE GENERATION ALGORITHM Sig

(1) $a_i = ( r_{0i}, t_{0i}, e_{0i}, r_{1i}, t_{1i}, e_{1i}, c_{0i}, c_{1i}, c_{2i} )$
(2) $Cmt \leftarrow H( c_{01}, c_{11}, c_{21}, \cdots, c_{0N}, c_{1N}, c_{2N} )$
(3) $( Ch_1, \cdots, Ch_N ) \leftarrow H( M, Cmt )$
(4) $Rsp_i \leftarrow Select( Ch_i, a_i )$
(5) DIGITAL SIGNATURE
    $:( Cmt, Rsp_1, \cdots, Rsp_N )$

+

### SIGNATURE VERIFYING ALGORITHM Ver

(1) $( Ch_1, \cdots, Ch_N ) \leftarrow H( M, Cmt )$
(2) $(c_{01}, c_{11}, c_{21}, \cdots, c_{0N}, c_{1N}, c_{2N}) \leftarrow$
        $Reproduce(Ch_1, \cdots, Ch_N, Rsp_1, \cdots, Rsp_N)$
(3) check  $Cmt = H(c_{01}, c_{11}, c_{21}, \cdots, c_{0N}, c_{1N}, c_{2N})$

EP 2 822 218 A1

# FIG. 9

$pk = (F, y)$

MODIFICATION TO DIGITAL SIGNATURE SCHEME

(5-PASS)

PROVER  VERIFIER

$sk = s$

**OPERATION #1**

$a_i = ( r_{0i}, t_{0i}, e_{0i}, r_{1i}, t_{1i}, e_{1i}, c_{0i}, c_{1i} )$
$Cmt \leftarrow H( c_{01}, c_{11}, \cdots, c_{0N}, c_{1N} )$

Cmt

**OPERATION #2**

Select $Ch_{A1}, \cdots, Ch_{AN}$

**OPERATION #3**

$b_i \leftarrow ( t_{1i}, e_{1i} )$
$d \leftarrow H( t_{11}, e_{11}, \cdots, t_{1N}, e_{1N} )$

$Ch_{A1}, \cdots, Ch_{AN}$

d

**OPERATION #4**

Select $Ch_{B1}, \cdots, Ch_{BN}$

**OPERATION #5**

$Rsp_i \leftarrow Select( Ch_{Bi}, a_i, b_i )$

$Ch_{B1}, \cdots, Ch_{BN}$

$Rsp_1, \cdots, Rsp_N$

**OPERATION #6**

$(c_{01}, c_{11}, \cdots, c_{0N}, c_{1N}, t_{11}, e_{11}, \cdots, t_{1N}, e_{1N}) \leftarrow$
Reproduce$(Ch_{A1}, \cdots, Ch_{AN},$
$Ch_{B1}, \cdots, Ch_{BN}, Rsp_1, \cdots, Rsp_N)$
check $Cmt = H(c_{01}, c_{11}, \cdots, c_{0N}, c_{1N})$
$d = H(t_{11}, e_{11}, \cdots, t_{1N}, e_{1N})$

MESSAGE M

---

**SIGNATURE GENERATION ALGORITHM Sig**

(1) $a_i = ( r_{0i}, t_{0i}, e_{0i}, r_{1i}, t_{1i}, e_{1i}, c_{0i}, c_{1i} )$
(2) $Cmt \leftarrow H( c_{01}, c_{11}, \cdots, c_{0N}, c_{1N} )$
(3) $( Ch_{A1}, \cdots, Ch_{AN} ) \leftarrow H( M, Cmt )$
(4) $b_i = ( t_{1i}, e_{1i} ), d \leftarrow H( t_{11}, e_{11}, \cdots, t_{1N}, e_{1N} )$
(5) $( Ch_{B1}, \cdots, Ch_{BN} ) \leftarrow$
$H( M, Cmt, Ch_{A1}, \cdots, Ch_{AN}, d )$
(6) $Rsp_i \leftarrow Select( Ch_{Bi}, a_i, b_i )$
(7) DIGITAL SIGNATURE : $(Cmt, d, Rsp_1, \cdots, Rsp_N)$

+

**SIGNATURE VERIFYING ALGORITHM Ver**

(1) $( Ch_{A1}, \cdots, Ch_{AN} ) \leftarrow H( M, Cmt )$
(2) $( Ch_{B1}, \cdots, Ch_{BN} ) \leftarrow$
$H( M, Cmt, Ch_{A1}, \cdots, Ch_{AN}, d )$
(3) $(c_{01}, c_{11}, \cdots, c_{0N}, c_{1N}, t_{11}, e_{11}, \cdots, t_{1N}, e_{1N}) \leftarrow$
Reproduce$(Ch_{A1}, \cdots, Ch_{AN},$
$Ch_{B1}, \cdots, Ch_{BN}, Rsp_1, \cdots, Rsp_N)$
(4) check $Cmt = H(c_{01}, c_{11}, \cdots, c_{0N}, c_{1N})$
$d = H(t_{11}, e_{11}, \cdots, t_{1N}, e_{1N})$

EP 2 822 218 A1

# FIG. 10

STRUCTURATION TECHNIQUE #1 (APPLICATION TO F)

$$F(x_1, \cdots, x_N) = \begin{cases} \displaystyle\sum_{I,J} a_{1IJ} x_I x_J + \sum_I b_{1I} x_I = y_1 \\ \vdots \\ \displaystyle\sum_{I,J} a_{MIJ} x_I x_J + \sum_I b_{MI} x_I = y_M \end{cases}$$

DATA STRUCTURE A          DATA STRUCTURE B

# FIG. 11

STRUCTURATION TECHNIQUE #1 (APPLICATION TO G)

$$G(x_1, \cdots, x_N, y_1, \cdots, y_N) = \begin{cases} \displaystyle\sum_{I,J} (a_{1IJ} + a_{1JI}) x_I y_J = z_1 \\ \vdots \\ \displaystyle\sum_{I,J} (a_{MIJ} + a_{MJI}) x_I y_J = z_M \end{cases}$$

DATA STRUCTURE C

**FIG. 12**

EP 2 822 218 A1

**INTERNATIONAL SEARCH REPORT**

International application No.

PCT/JP2013/053491

**A. CLASSIFICATION OF SUBJECT MATTER**
*H04L9/32*(2006.01)i

According to International Patent Classification (IPC) or to both national classification and IPC

**B. FIELDS SEARCHED**

Minimum documentation searched (classification system followed by classification symbols)
H04L9/32

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)
JSTPlus/JMEDPlus/JST7580(JDreamII), CiNii

**C. DOCUMENTS CONSIDERED TO BE RELEVANT**

| Category* | Citation of document, with indication, where appropriate, of the relevant passages | Relevant to claim No. |
|---|---|---|
| Y<br>A | Koichi Sakumoto et al, Public-Key Identification Schemes Based on Multivariate Quadratic Polynomials, Advances in Cryptology-CRYPTO 2011 31st Annual Cryptology Conference, Santa Barbara, CA, USA, August, 2011.08.06, Volume 6841, p.706-723 | 1,4,6-14,16<br>2,3,5,15 |
| Y | Come Berbain et al, Efficient Implementations of Multivariate Quadratic Systems, Selected Areas in Cryptography 13th International Workshop, SAC 2006, Montreal, Canada, August 17-18,, 2007, Volume 4356, p.174-187 | 1,4,6-14,16 |

[X]  Further documents are listed in the continuation of Box C.          [ ]  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 07 March, 2013 (07.03.13) | 19 March, 2013 (19.03.13) |

| Name and mailing address of the ISA/<br>Japanese Patent Office | Authorized officer |
|---|---|
| Facsimile No. | Telephone No. |

Form PCT/ISA/210 (second sheet) (July 2009)

INTERNATIONAL SEARCH REPORT

International application No.

PCT/JP2013/053491

C (Continuation).    DOCUMENTS CONSIDERED TO BE RELEVANT

| Category* | Citation of document, with indication, where appropriate, of the relevant passages | Relevant to claim No. |
|---|---|---|
| Y | Tsugio NAKAMURA et al., Pasokon de Jisshu shinagara Manaberu Ango no Shikumi to Jisso, first edition, Kabushiki Kaisha Nippon Riko Shuppankai, 30 June 2009 (30.06.2009), pages 208 to 212 | 6-9 |
| Y | WO 2005/124537 A1  (Fujitsu Ltd.), 29 December 2005 (29.12.2005), paragraphs [0047] to [0057]; fig. 11, 12 & US 2007/0067375 A1    & EP 1758020 A1 | 7-9 |

Form PCT/ISA/210 (continuation of second sheet) (July 2009)

**INTERNATIONAL SEARCH REPORT**

International application No.

PCT/JP2013/053491

| Box No. II | Observations where certain claims were found unsearchable (Continuation of item 2 of first sheet) |
|---|---|

This international search report has not been established in respect of certain claims under Article 17(2)(a) for the following reasons:

1. ☒ Claims Nos.: 17, 18
because they relate to subject matter not required to be searched by this Authority, namely:
Claims 17 and 18 pertain to scientific and mathematical theories themselves and thus relate to a subject matter on which this International Searching Authority is not required to carry out a search under the provisions of PCT Article 17(2)(a)(i) and PCT Rule 39.1.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 822 218 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JACQUES PATARIN.** Asymmetric Cryptography with a Hidden Monomial. *CRYPTO,* 1996, 45-60
- QUARTZ, 128-Bit Long Digital Signatures. **PATARIN, J. ; COURTOIS, N. ; GOUBIN, L.** Topics in Cryptology - CT-RSA 2001. Springer-Verlag, April 2001, vol. 2020, 282-297

- **KOICHI SAKUMOTO ; TAIZO SHIRAI ; HARUNAGA HIWATARI.** Public-Key Identification Schemes Based on Multivariate Quadratic Polynomials. *CRYPTO 2011,* 2011, 706-723